# EUROPEAN PATENT APPLICATION

(11) **EP 4 439 440 A1**
(43) Date of publication of application: **02.10.2024**
(21) Application number: 22898408.4
(22) Date of filing: 10.11.2022
(51) Int. Cl.: G06Q 50/02

(54) **PROGRAM, INFORMATION PROCESSING DEVICE, AND INFORMATION PROCESSING METHOD**

(30) Priority: 24.11.2021 JP 2021189809
(71) Applicant: Sony Group Corporation, Tokyo 108-0075 (JP)
(72) Inventor: SUZUKI, Godai, Tokyo 105-0014 (JP); KATANO, Kosuke, Tokyo 105-0014 (JP); FUNABASHI, Masatoshi, Tokyo 105-0014 (JP)
(74) Representative: Witte, Weller & Partner Patentanwälte mbB
(86) International application number: PCT/JP2022/041871
(87) International publication number: WO 2023/095624

(57) **Abstract**

The present technique relates to a program, an information processing device, and an information processing method that make it possible to specify a component useful for evaluating the state of an ecosystem, from among a huge number of components of ecosystem information.

By analyzing ecosystem information of a plurality of ecosystems, an indicator element to serve as an indicator of a feature of an ecosystem is specified, from components of the ecosystem information. The present technique can be applied, for example, in an ecosystem support system or the like that supports the management of an ecosystem.

## Description

### [Technical Field]

The present technique relates to a program, an information processing device, and an information processing method, and particularly relates to a program, an information processing device, and an information processing method that make it possible to identify components useful for evaluating the state of an ecosystem, for example.

### [Background Art]

When managing an ecosystem, it is necessary to determine whether management is appropriate, and to make such a determination, it is necessary to evaluate the state of the ecosystem.

An evaluation system used by the Society for Ecological Restoration to certify ecosystems, for example (e.g., NPL 1), can be given as a system for evaluating the state of an ecosystem. In this evaluation system, the state of the ecosystem is predicted by quantifying the impact of development on the habitats of species in the context of urban planning and the like.

In this evaluation system, the impact on a habitat is quantified on the basis of the degree to which a specific species is present, which is determined in advance. The presence of a specific species is evaluated as an indicator of the presence of other species, such as species that have biological interactions with the specific species.

### [Citation List]

### [Non Patent Literature]

[NPL 1]
"International Standards for The Practice of Ecological Restoration - Including Principles and Key Concepts", Society for Ecological Restoration, December 2016 (https://cdn.ymaws.com/sites/www.ser.org/resource/resmgr/docs/SER_Internation al_Standards.pdf)

### [Summary]

### [Technical Problem]

There are a huge number (types) of information that serves as ecosystem information related to an ecosystem, i.e., components of ecosystem information, and it is not easy for users to find components useful for evaluating the state of an ecosystem from such a huge number of components.

Having been achieved in light of such circumstances, the present technique makes it possible to identify components useful for evaluating the state of an ecosystem.

### [Solution to Problem]

An information processing device or program of the present technique is an information processing device including a specifying unit that, by analyzing ecosystem information of a plurality of ecosystems, specifies an indicator element to serve as an indicator of a feature of an ecosystem, from components of the ecosystem information; or is a program that causes a computer to function as such an information processing device.

An information processing method of the present technique is an information processing method including specifying, by analyzing ecosystem information of a plurality of ecosystems, an indicator element to serve as an indicator of a feature of an ecosystem, from components of the ecosystem information.

In the present technique, by analyzing ecosystem information of a plurality of ecosystems, an indicator element to serve as an indicator of a feature of an ecosystem is specified from components of the ecosystem information.

The information processing device may be an independent device or an internal block constituting one device.

The program can be provided by being transmitted over a transmission medium or by being recorded in a recording medium.

### [Brief Description of Drawings]

[Fig. 1]

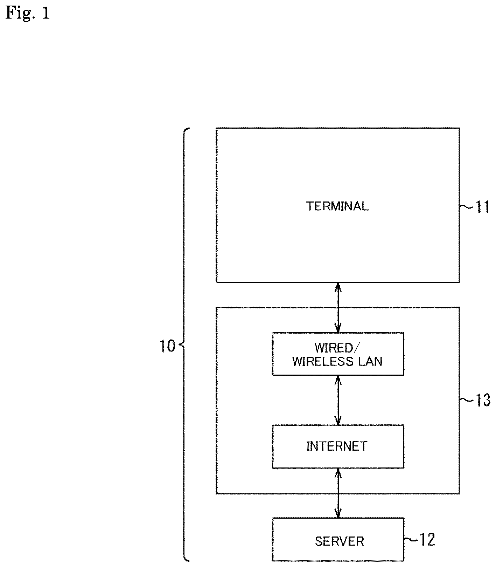

   Fig. 1 is a diagram illustrating an example of the configuration of an embodiment of an information processing system to which the present technique is applied.
[Fig. 2]

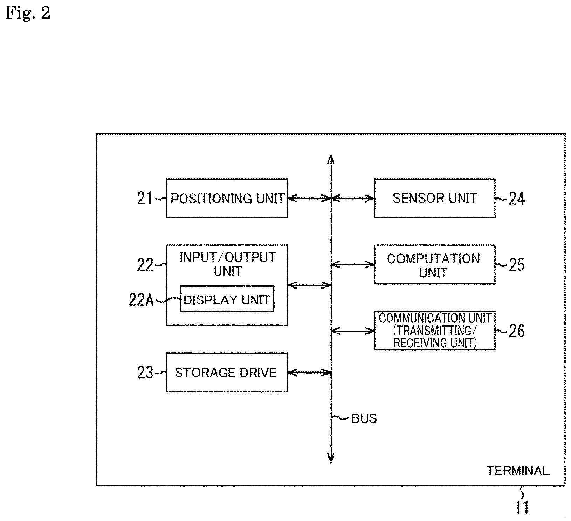

   Fig. 2 is a diagram illustrating an example of the hardware configuration of a terminal 11.
[Fig. 3]

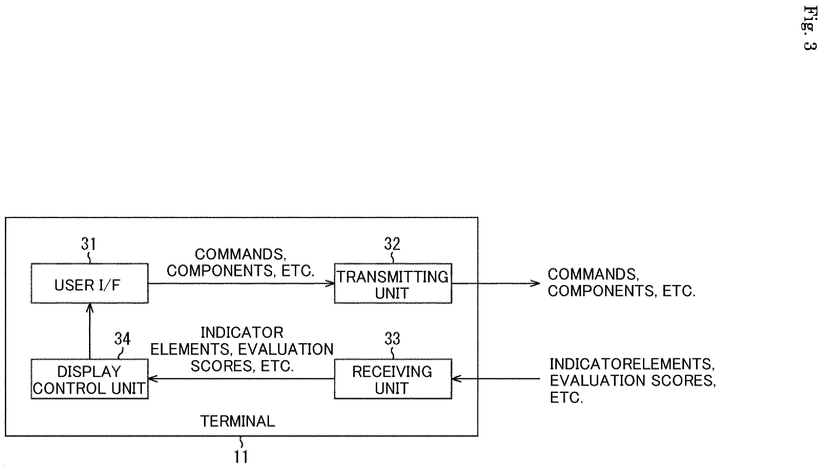

   Fig. 3 is a block diagram illustrating an example of the functional configuration of the terminal 11.
[Fig. 4]

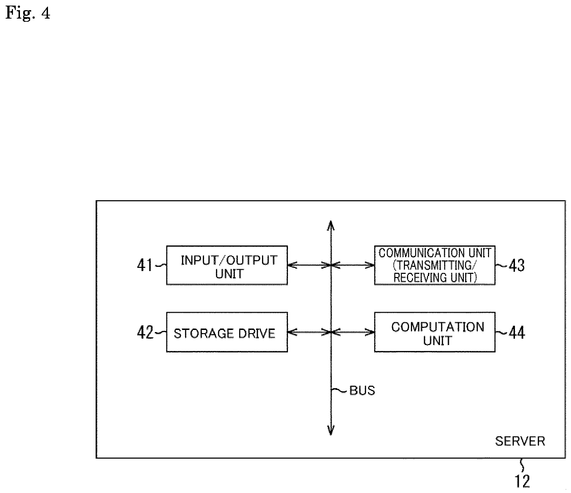

   Fig. 4 is a diagram illustrating an example of the hardware configuration of a server 12.
[Fig. 5]

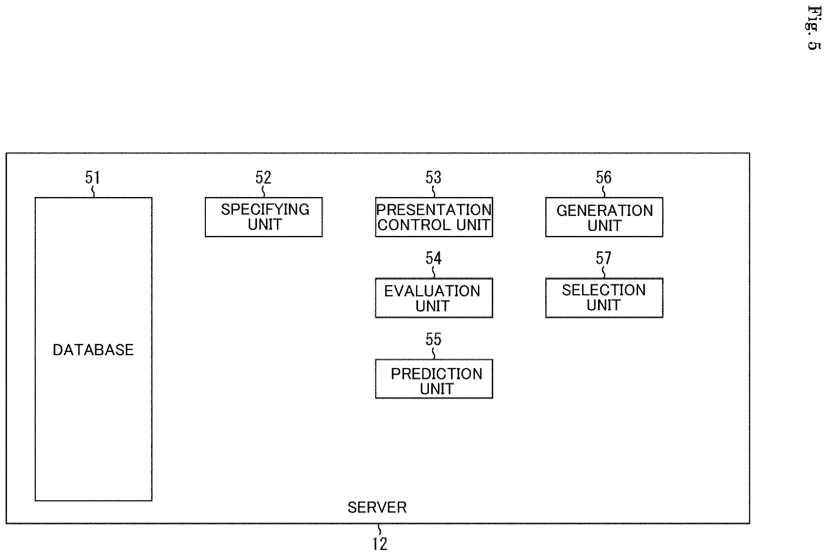

   Fig. 5 is a block diagram illustrating an example of the functional configuration of the server 12.
[Fig. 6]

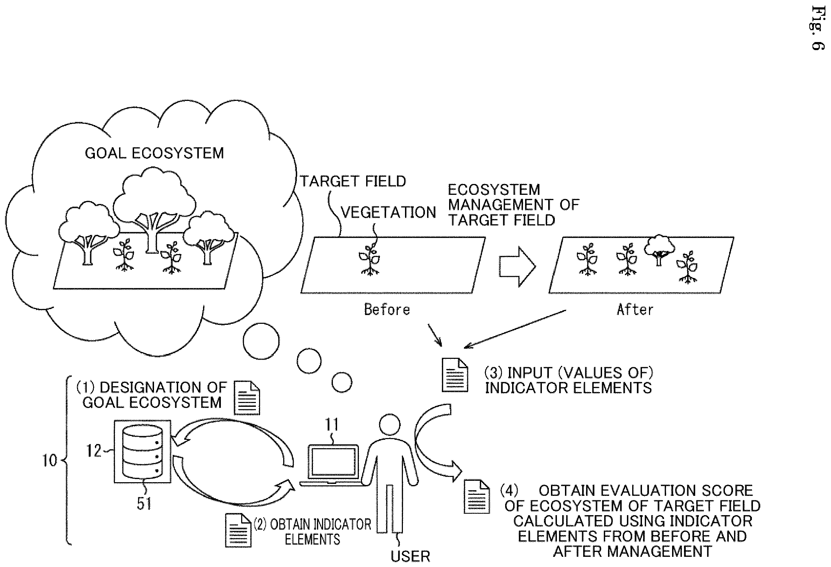

   Fig. 6 is a diagram illustrating an example of management support performed by an information processing system 10.
[Fig. 7]

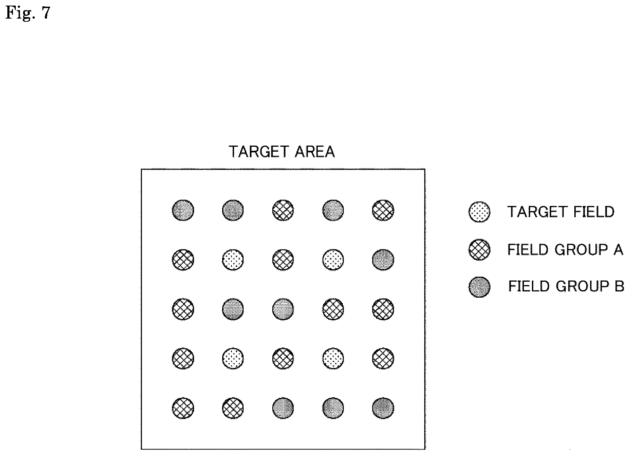

   Fig. 7 is a diagram illustrating another example of management support performed by the information processing system 10.
[Fig. 8]

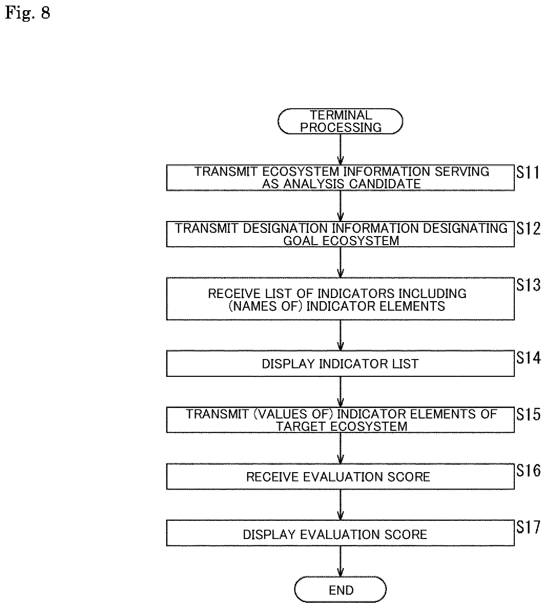

   Fig. 8 is a flowchart illustrating an example of processing by the terminal 11 when presenting an evaluation score to a user.
[Fig. 9]

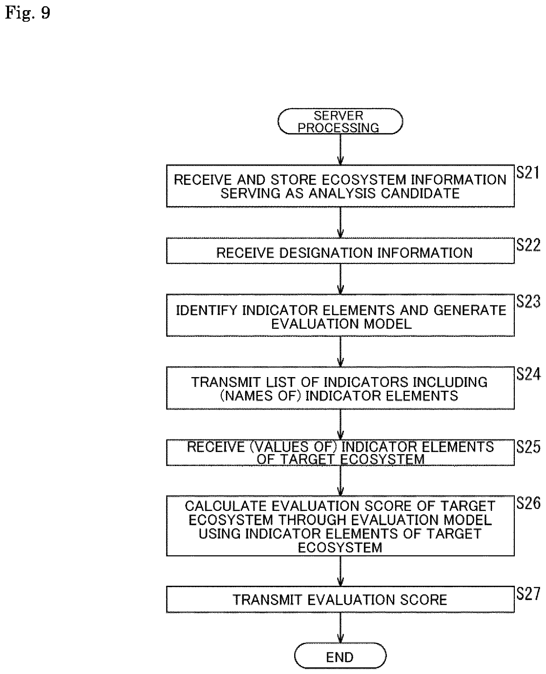

   Fig. 9 is a flowchart illustrating an example of processing by the server 12 when presenting an evaluation score to a user.
[Fig. 10]

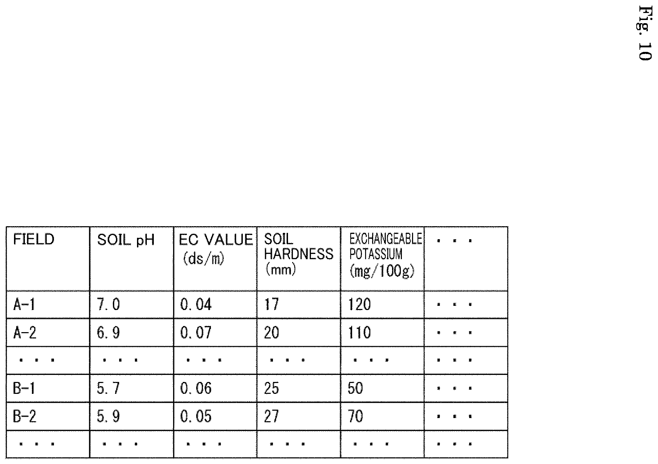

   Fig. 10 is a diagram illustrating a specific example of components of ecosystem information.
[Fig. 11]

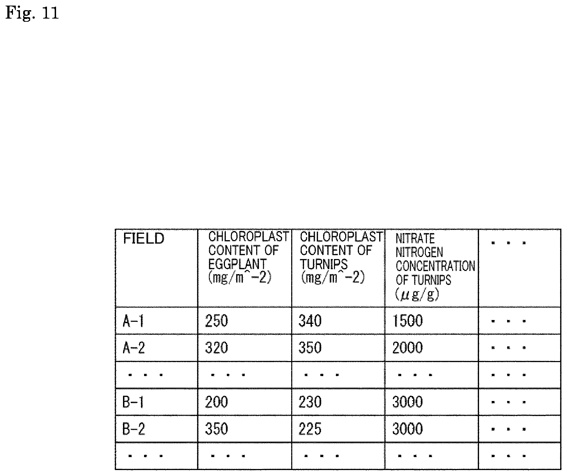

   Fig. 11 is a diagram illustrating another specific example of components of ecosystem information.
[Fig. 12]

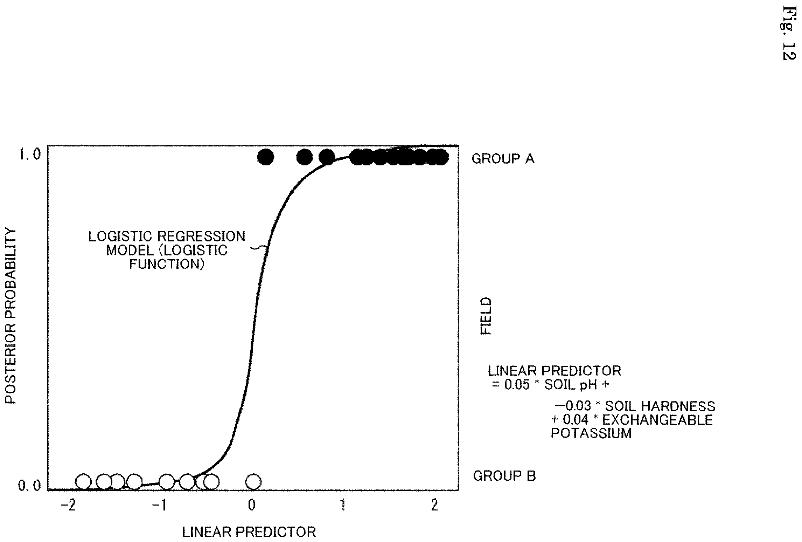

   Fig. 12 is a diagram illustrating logistic regression analysis with a single L1 regularization in analysis of ecosystem information of a plurality of ecosystems, performed by a specifying unit 52.
[Fig. 13]

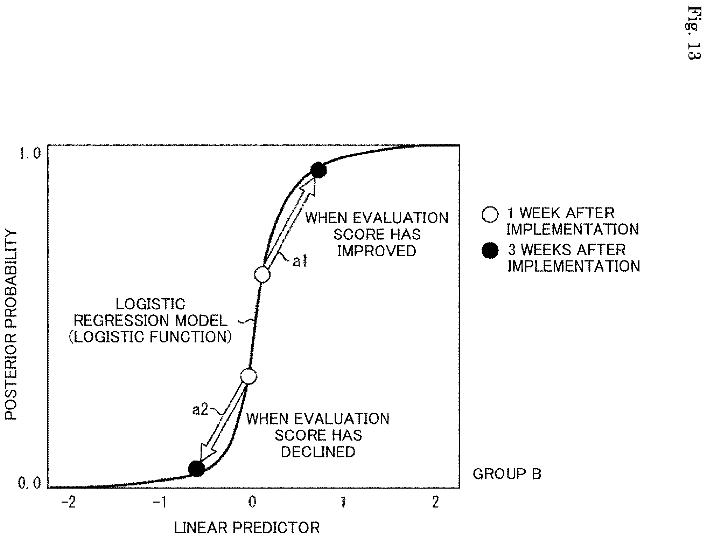

   Fig. 13 is a diagram illustrating an example of applying, to ecosystem management, a logistic regression model as an evaluation model obtained by logistic regression analysis with L1 regularization or an evaluation score calculated using a linear predictor.
[Fig. 14]

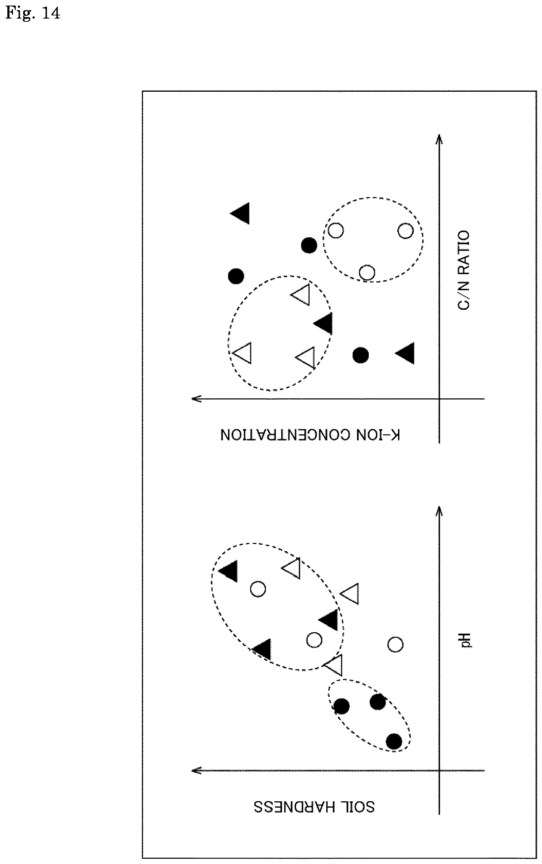

   Fig. 14 is a diagram illustrating an example of the distribution of two components of a plurality of ecosystems to be analyzed.
[Fig. 15]

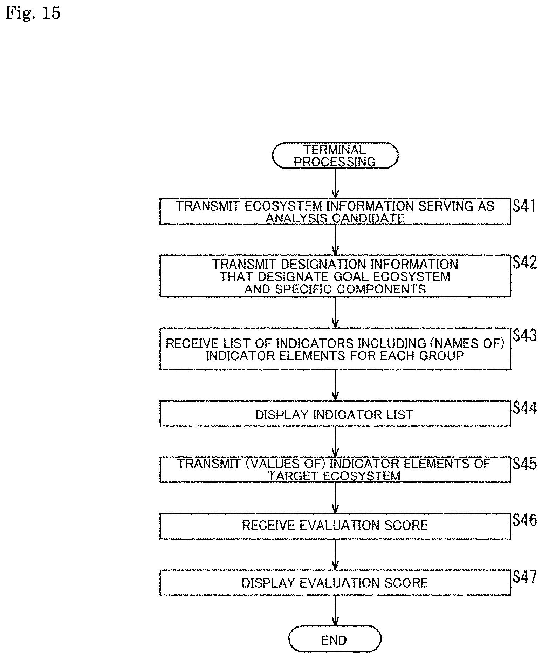

   Fig. 15 is a flowchart illustrating an example of processing by the terminal 11 when specifying an indicator element and evaluating a target ecosystem through a classification method, and presenting the indicator element and an evaluation score to a user.
[Fig. 16]

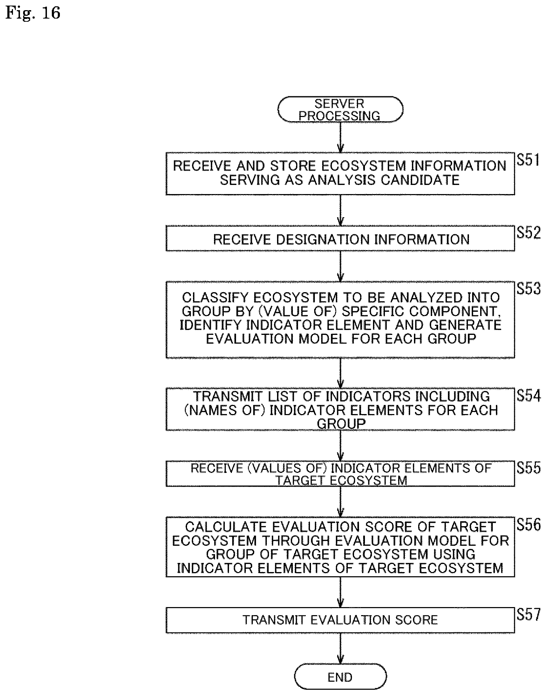

   Fig. 16 is a flowchart illustrating an example of processing by the server 12 when specifying an indicator element and evaluating a target ecosystem through a classification method, and presenting the indicator element and an evaluation score to a user.
[Fig. 17]

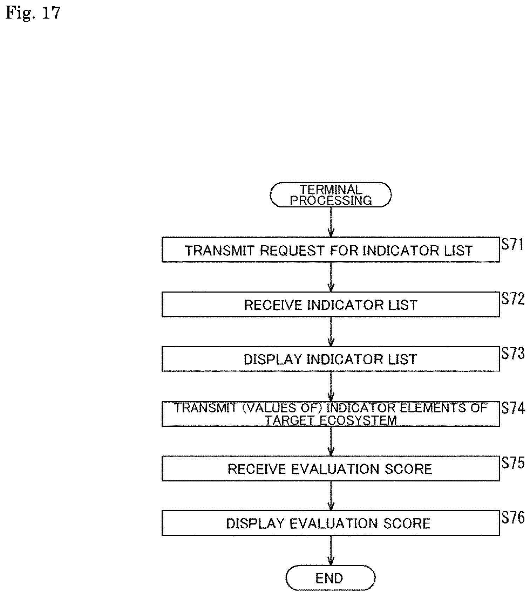

   Fig. 17 is a flowchart illustrating an example of processing by the terminal 11 when specifying an indicator element and evaluating a target ecosystem using a specific component, and presenting the indicator element and an evaluation score to a user.
[Fig. 18]

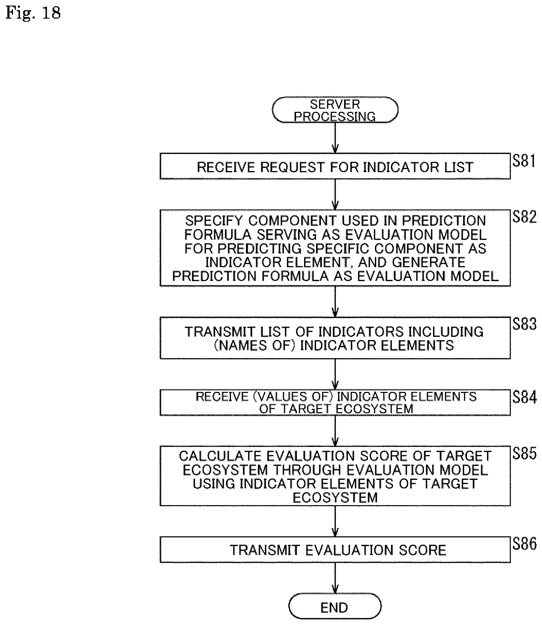

   Fig. 18 is a flowchart illustrating an example of processing by the server 12 when specifying an indicator element and evaluating a target ecosystem using a specific component, and presenting the indicator element and an evaluation score to a user.
[Fig. 19]

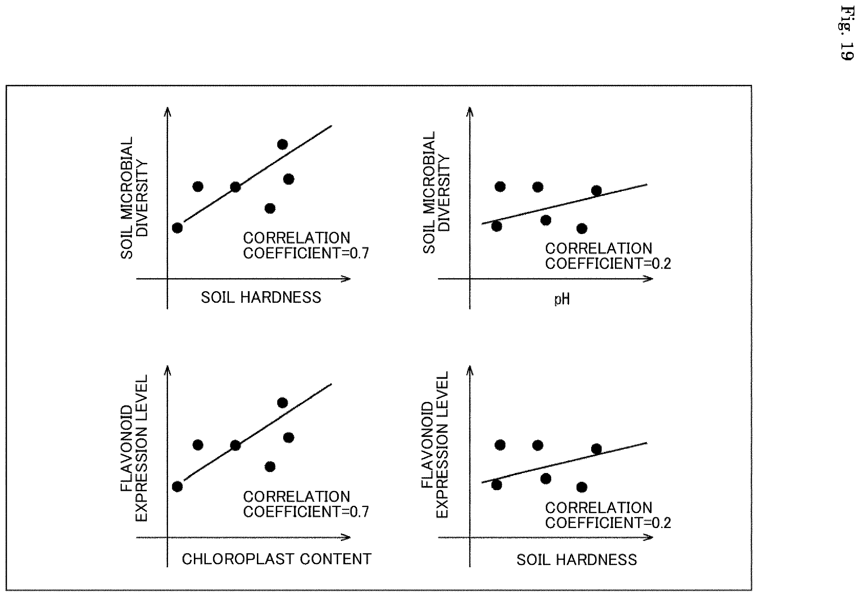

   Fig. 19 is a diagram illustrating an example of the correlation between a specific component and other components.
[Fig. 20]

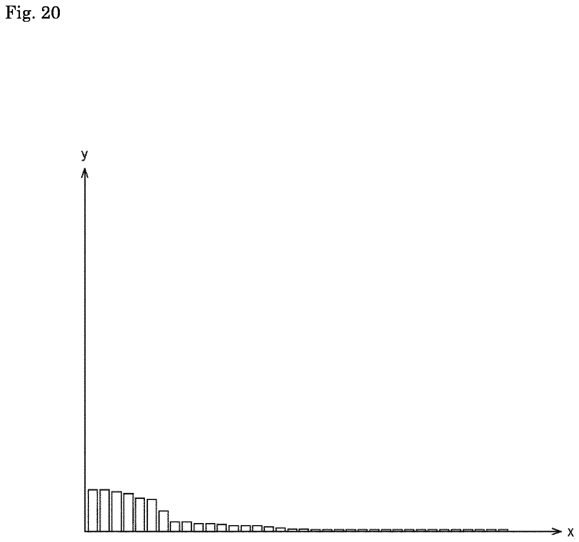

   Fig. 20 is a diagram illustrating an example of the distribution of plants in an ecosystem in an ecologically optimal region.
[Fig. 21]

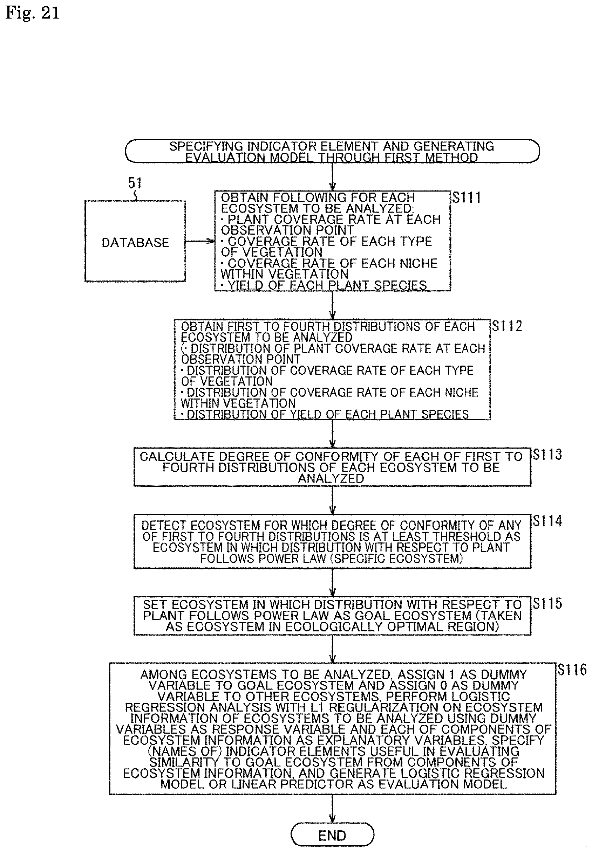

   Fig. 21 is a flowchart illustrating an example of processing for specifying an indicator element and generating an evaluation model according to a first method.
[Fig. 22]

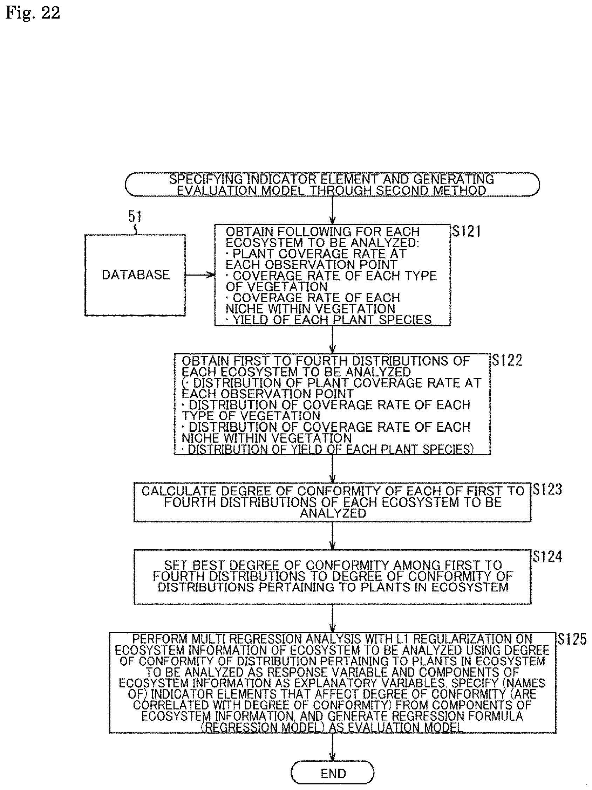

   Fig. 22 is a flowchart illustrating an example of processing for specifying an indicator element and generating an evaluation model according to a second method.
[Fig. 23]

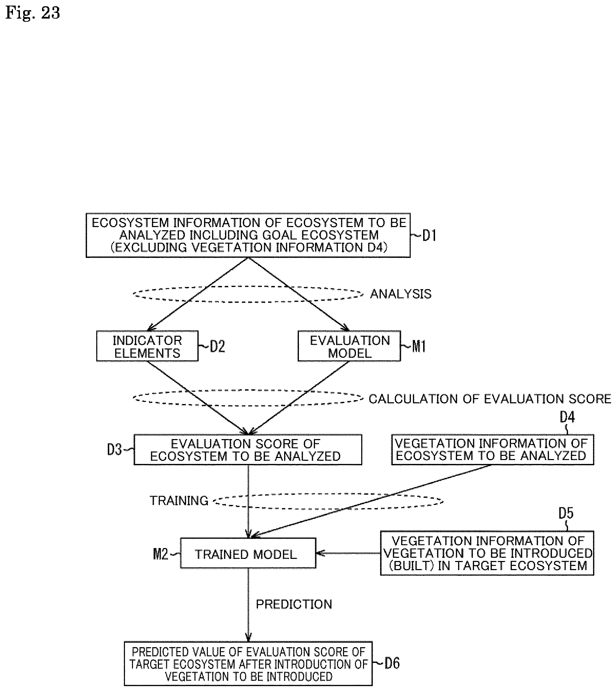

   Fig. 23 is a diagram illustrating the prediction of an evaluation score for an ecosystem from vegetation information by a prediction unit 55.
[Fig. 24]

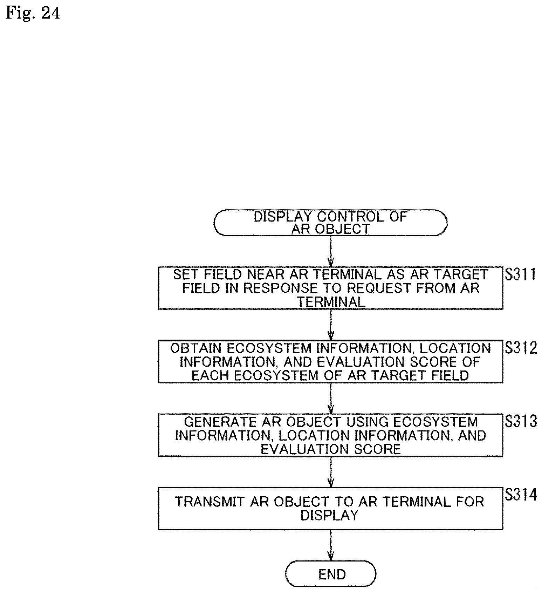

   Fig. 24 is a flowchart illustrating an example of processing for AR object display control by a generation unit 56.
[Fig. 25]

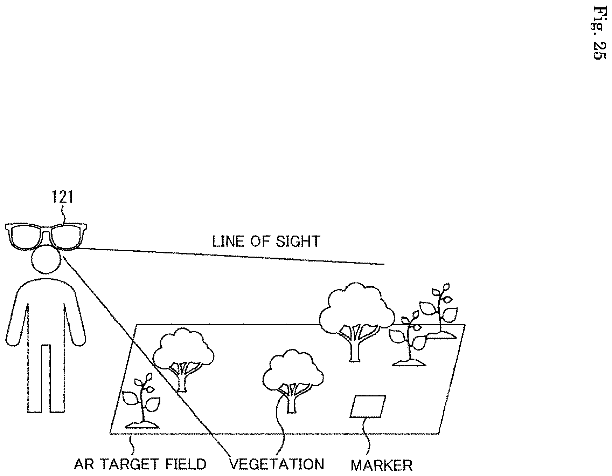

   Fig. 25 is a diagram illustrating a state of an AR target field observed by a user.
[Fig. 26]

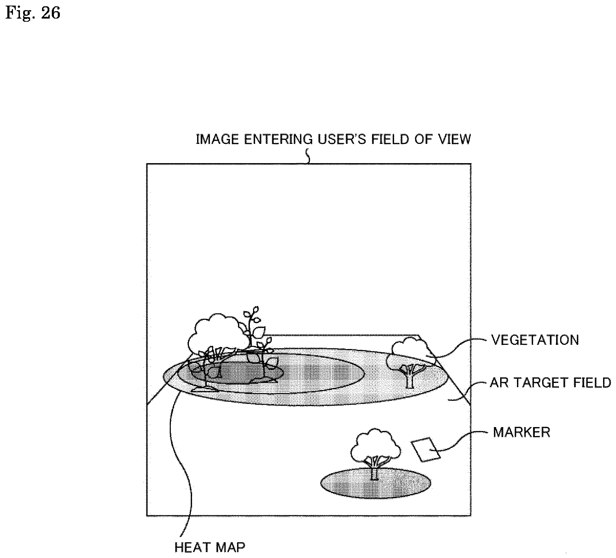

   Fig. 26 is a diagram illustrating an example of an image entering a field of view of a user through smart glasses 121 serving as an AR terminal.
[Fig. 27]

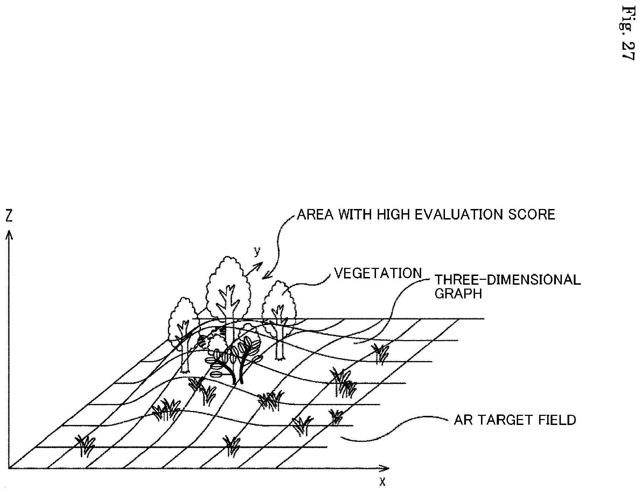

   Fig. 27 is a diagram illustrating an example of a three-dimensional graph serving as an AR object that represents an evaluation score of each of ecosystems into which an AR target field is divided.
[Fig. 28]

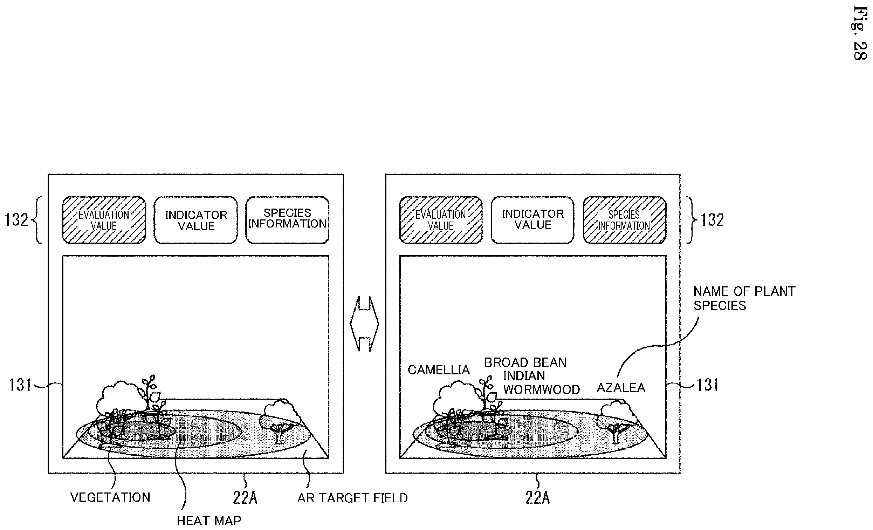

   Fig. 28 is a diagram illustrating an example of the display of AR objects in the terminal 11, which is a smartphone.
[Fig. 29]

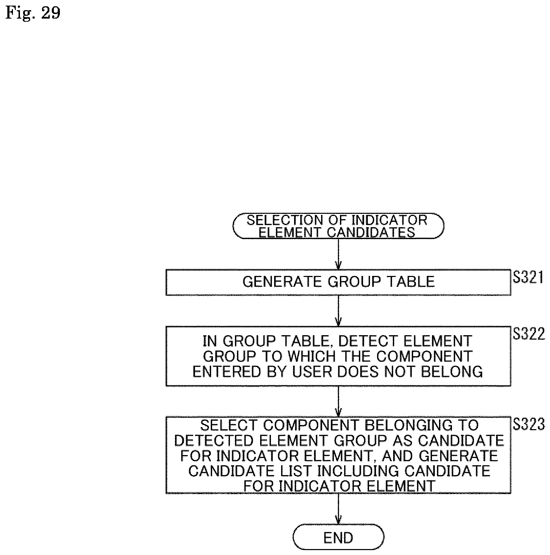

   Fig. 29 is a flowchart illustrating an example of processing for selecting candidates for an indicator element by a selection unit 57.
[Fig. 30]

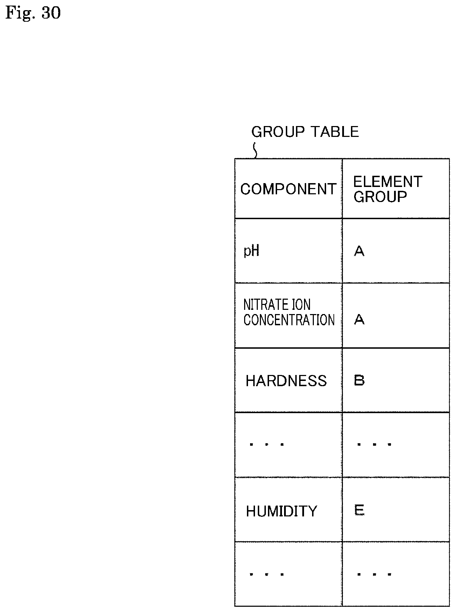

   Fig. 30 is a diagram illustrating an example of a group table.
[Fig. 31]

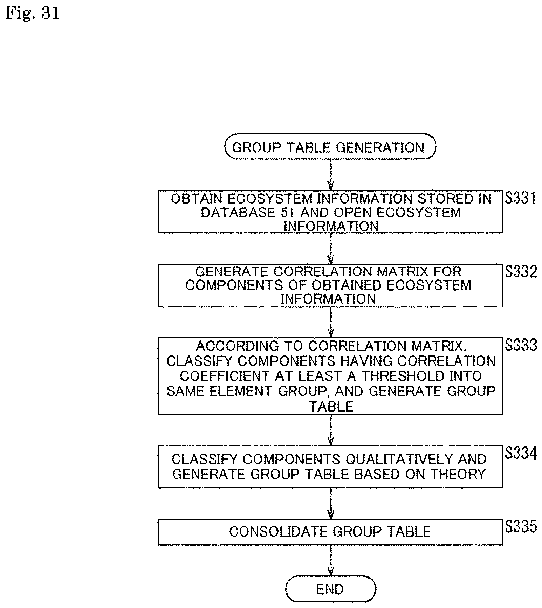

   Fig. 31 is a flowchart illustrating an example of processing for generating a group table.
[Fig. 32]

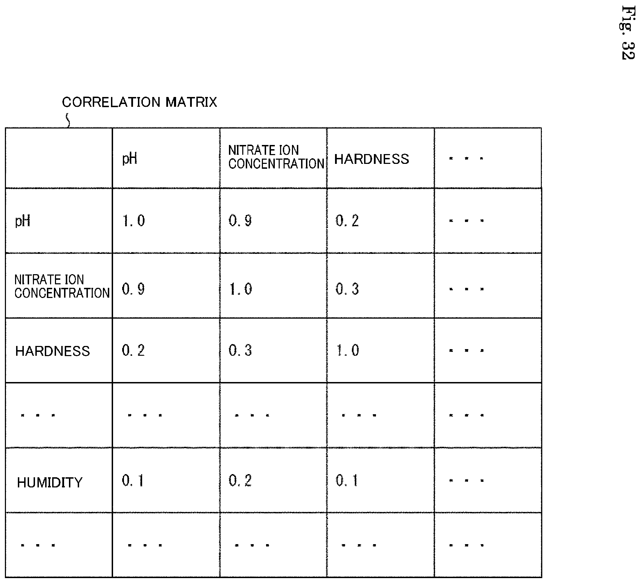

   Fig. 32 is a diagram illustrating an example of a correlation matrix among components used to generate a correlation group table.

### [Description of Embodiments]

### <One Embodiment of Information Processing System to which Present Technique Is Applied>

Fig. 1 is a diagram illustrating an example of the configuration of an embodiment of an information processing system to which the present technique is applied.

An information processing system 10 constitutes an ecosystem support system that supports the management of an ecosystem (ecosystem management).

The information processing system 10 includes one or more terminals 11 and one or more servers 12. The terminal 11 and the server 12 can communicate with each other over a network 13, which includes a wired local area network (LAN), a wireless LAN, the Internet, a mobile communication network such as 5G, and the like.

In the information processing system 10, when a plurality of servers 12 are provided, the plurality of servers 12 can be caused to perform the processing described below in a distributed manner. In addition, the terminals 11 which the servers 12 handle can be assigned, and each server 12 can be caused to perform processing only for the terminals 11 which that server 12 handles.

In addition, the information processing system 10 can cause the terminal 11 to perform some or all of the processing performed by the server 12. If the terminal 11 is to perform all the processing performed by the server 12, the information processing system 10 can be configured without the server 12.

The terminal 11 is constituted by, for example, a personal computer (PC), a mobile terminal such as a smartphone, or the like, and is operated by a user. The terminal 11 transmits necessary information to the server 12 and receives necessary information from the server 12 (over the network 13).

The server 12 receives information from the terminal 11 (over the network 13) and performs various types of processing using the information from the terminal 11 as necessary. The server 12 also transmits necessary information to the terminal 11 (over the network 13).

### <Example of Configuration of Terminal 11>

Fig. 2 is a diagram illustrating an example of the hardware configuration of the terminal 11.

The terminal 11 includes a positioning unit 21, an input/output unit 22, a storage drive 23, a sensor unit 24, a computation unit 25, and a communication unit 26. The units from the positioning unit 21 to the communication unit 26 are connected to each other by a bus such that the units can exchange information.

The positioning unit 21 is implemented by a global positioning system (GPS), for example, and measures the position of (positions) the terminal 11 and outputs position information expressing that position, such as latitude and longitude (and the necessary altitude).

The input/output unit 22 includes a keyboard, a touch panel, a microphone, or the like (not shown), and accepts operations and other inputs from the user. The input/output unit 22 includes a display unit 22A and a speaker (not shown), and presents information to the user by displaying an image, outputting sound, or the like.

The storage drive 23 is constituted by a solid state drive (SSD), a hard disk drive (HDD), or the like, for example. Programs executed by the computation unit 25, data necessary for processing by the computation unit 25, and the like are stored (recorded) in the storage drive 23.

The sensor unit 24 includes a camera that captures an image by sensing light, a hygrometer that senses humidity, a thermometer that senses temperature, an angular velocity sensor (gyro sensor) that detects angular velocity, and various other necessary sensors. The sensor unit 24 senses various physical quantities and outputs sensor information such as images as the result of the sensing.

The computation unit 25 includes a processor such as a central processing unit (CPU) or a digital signal processor (DSP) and a memory such as a random access memory (RAM), and executes programs stored in the storage drive 23 to perform various types of processing.

The programs executed by the computation unit 25 can be installed on a computer serving as the terminal 11 from, for example, a removable recording medium such as a digital versatile disc (DVD) or a memory card. The programs can also be downloaded to a computer serving as the terminal 11 over the network 13 or the like, for example, and then installed.

The communication unit 26 functions as a transmitting unit and a receiving unit that transmit and receive information, respectively, over the network 13 or the like.

Fig. 3 is a block diagram illustrating an example of the functional configuration of the terminal 11.

The functional configuration of the terminal 11 in Fig. 3 is implemented functionally by the computation unit 25 in Fig. 2 executing a program.

In Fig. 3, the terminal 11 includes a user interface (I/F) 31, a transmitting unit 32, a receiving unit 33, and a display control unit 34.

The user I/F 31 accepts operations of the terminal 11 by the user, and in response to the operations, supplies, to the transmitting unit 32, commands requesting processing to the server 12, components (values) of ecosystem information, and other information used for processing by the server 12.

The "ecosystem information" is information expressing the state of an ecosystem, and the "components of the ecosystem information" are various types of information that serves as the ecosystem information.

The components of the ecosystem information include climate information on the climate of the ecosystem, vegetation information on vegetation, and the like. The components of the ecosystem information further include information on the soil in the ecosystem, e.g., chemical information, physical information, and biological information of the soil. The components of the ecosystem information also include information on plants, e.g., chemical information, physical information, biological information, and the like of the plants.

The climate information includes, for example, the climate zone of the ecosystem, the amount of precipitation, the sunlight intensity, and the like.

The vegetation information includes, for example, a profile of each type of vegetation in the ecosystem, e.g., a coverage rate of the vegetation covering the topsoil of the ecosystem, the proportion of niches, information on the plant species that make up the vegetation (the names of the plant species that make up the vegetation, the proportion of the vegetation constituted by each plant species, and so on), and the like. The vegetation information also includes the coverage rate of all vegetation in the ecosystem covering the topsoil of the ecosystem, the coverage rate and proportion of niches of various species (types) of vegetation (e.g., shrub vegetation, tree vegetation, and the like) covering the topsoil of the ecosystem, and the like.

The chemical information, physical information, and biological information of the soil in the ecosystem includes, for example, information on various types of soil obtained from soil samples from the ecosystem. The chemical information of the soil includes, for example, the pH, electric conductivity (EC), and the like of the soil. The physical information of the soil includes, for example, the hardness, the exchangeable potassium content, and the like of the soil. The biological information of the soil includes, for example, the microbial diversity of the soil.

The chemical information, physical information, and biological information of the plants includes, for example, various types of information on plants obtained from various individual plants, various plant species, and the like in the ecosystem. The chemical information of the plants includes, for example, the chloroplast content of the individual plants obtained by non-destructive means, such as measuring reflected light; the concentration of nitrate ions and flavonoid expression levels in samples obtained by invasive means, such as fracturing the tissues of samples collected from individual plants; and the like. The physical information of the plants includes, for example, the coverage rate of each plant species covering the topsoil of the ecosystem, the number and weight of seeds, and the like. The biological information of the plants includes, for example, plant diversity and the like.

Some or all of the above-mentioned information on climate zones and the like can be used as components of the ecosystem information. In addition to the above-described information on the climate zones and the like, information expressing the state of the ecosystem, e.g., information pertaining to the environment of the ecosystem, such as the humidity, temperature, population density, carbon dioxide concentration, and the like of the ecosystem, can also be used as components of the ecosystem information.

The ecosystem information can also include both components of qualitative variables and components of quantitative variables.

For example, for the litter layer of the ecosystem, components expressing the presence or absence of the litter layer are qualitative variables, and components expressing the depth and dry weight of the litter layer are quantitative variables. For example, for the annual plant niche of the ecosystem, components expressing whether the proportion of the niche is 50% or more are qualitative variables, and components expressing (the value of) the proportion of the niche are quantitative variables.

Here, "vegetation" refers to a group of one or more plant species, e.g., when one or more plant species having common properties, such as shrubs and herbs, grow together.

The terminal 11 can obtain various components of the ecosystem information of the ecosystem to be managed by the user, for example.

For example, in the terminal 11, the sensor unit 24 can process (analyze) an image of the ecosystem captured by a camera to recognize plant species appearing in the image, and obtain the number of plant species as (the value of) the component expressing plant diversity.

Additionally, for example, in the terminal 11, the humidity and temperature sensed by the hygrometer and thermometer of the sensor unit 24 can be obtained as (the value of) a component.

Additionally, for example, in the terminal 11, when the user manipulates the terminal 11 so as to be located in the ecosystem to be managed, a position represented by the position information output by the positioning unit 21 can be obtained as the position of the ecosystem to be managed, and the climate zone and geographical division at the location of the ecosystem can be obtained as (the value of) the component.

Additionally, for example, in the terminal 11, by having the user input the name of a species discovered by the user observing the ecosystem to be managed, the user can obtain the presence or absence of the species corresponding to the name as (the value of) the component.

In addition, for information obtained by performing metagenomic analysis or the like of actual samples, such as soil, at specialized institutions and the like, the terminal 11 can obtain that information as a component by receiving the results of the sample analysis or the like through communication, by having a user notified of the results enter the results, and so on.

The user I/F 31 displays images in accordance with display control performed by the display control unit 34. The user I/F 31 can present information to the user by displaying images, outputting audio, and the like.

The transmitting unit 32 transmits various types of information to the server 12 and the like. For example, the transmitting unit 32 transmits commands from the user I/F 31, components of ecosystem information, and the like to the server 12.

The receiving unit 33 receives various types of information from the server 12 and the like. For example, the receiving unit 33 receives (the names of) components as indicator elements (described later) transmitted from the server 12, evaluation scores, and the like, and supplies those items to the display control unit 34.

The display control unit 34 performs display control for displaying images in the user I/F 31. For example, the display control unit 34 causes the user I/F 31 to display images such as (the names of) indicator elements from the receiving unit 33, evaluation scores, and the like.

### <Example of Configuration of Server 12>

Fig. 4 is a diagram illustrating an example of the hardware configuration of the server 12.

The server 12 includes an input/output unit 41, a storage drive 42, a communication unit 43, and a computation unit 44. The units from the input/output unit 41 to the computation unit 44 are connected to each other by a bus such that the units can exchange information.

The input/output unit 41 includes a keyboard, a touch panel, a microphone, or the like (not shown), and accepts operations and other inputs from an operator of the server 12. The input/output unit 22 also includes a display unit (display), a speaker, and the like (not shown), and presents information to the operator or the like by displaying images, outputting sound, or the like.

The storage drive 42 is constituted by an SSD, an HDD, or the like, for example. Programs executed by the computation unit 44, data necessary for processing by the computation unit 44, and the like are stored (recorded) in the storage drive 42.

The communication unit 43 functions as a transmitting unit and a receiving unit that transmit and receive information, respectively, over the network 13.

The computation unit 44 includes a processor such as a CPU or a DSP, and a memory such as a RAM, and performs various types of processing such as detection, calculation, evaluation, and processing various types of events such as key events by executing programs stored in the storage drive 42.

The programs executed by the computation unit 44 can be installed on a computer serving as the server 12 from, for example, a removable recording medium such as a DVD or a memory card. The programs can also be downloaded to a computer serving as the server 12 over the network 13 or the like, for example, and then installed.

Fig. 5 is a block diagram illustrating an example of the functional configuration of the server 12.

The functional configuration of the server 12 in Fig. 5 is implemented functionally by the computation unit 44 in Fig. 4 executing a program.

In Fig. 4, the server 12 includes a database 51, a specifying unit 52, a presentation control unit 53, an evaluation unit 54, a prediction unit 55, a generation unit 56, and a selection unit 57.

Note that the processing performed by the server 12 in Fig. 5 can be performed in a distributed manner by a plurality of servers.

In other words, if the server 12 is constituted by a plurality of servers, each of the database 51 to the selection unit 57, or a plurality of blocks among the database 51 to the selection unit 57, can be distributed throughout the plurality of servers.

In addition, some or all of the processing performed by the server 12 in Fig. 5 can be performed by the terminal 11.

In other words, each of the database 51 to the selection unit 57, or a plurality of blocks among the database 51 to the selection unit 57, can be provided in the terminal 11 instead of the server 12. For example, the specifying unit 52 can be provided in the terminal 11 instead of the server 12, and the specifying unit 52 and the evaluation unit 54 can be provided in the terminal 11 instead of the server 12.

The database 51 stores the ecosystem information of various ecosystems. For example, the database 51 collects (receives) and stores the ecosystem information of various ecosystems from the terminal 11 of each user, databases on the Internet, and the like.

For example, in the database 51, (the values of) various components of the ecosystem information of the ecosystem, i.e., the climate zone, geographical division, soil microbial diversity, and the like of the ecosystem, are stored in association with identification information that identifies the ecosystem, such as a name and identification (ID) of the ecosystem.

In the database 51, the identification information of the ecosystem can be stored in association with the position information of the ecosystem as necessary.

Furthermore, in the database 51, the components of the ecosystem information can be stored in association with the date/time when those components were observed (obtained) as necessary. For example, the humidity serving as a component can be stored in association with the date/time when the humidity was observed (sensed).

By analyzing the ecosystem information of a plurality of ecosystems stored in the database 51, the specifying unit 52 specifies (the name of) an indicator element that serves as an indicator of features of the ecosystem from the components of the ecosystem information.

Furthermore, using the indicator element, the specifying unit 52 generates an evaluation model that calculates an evaluation score for evaluating the state of a target ecosystem to be evaluated, i.e., generates an evaluation score calculation formula, for example. Both a linear model and a non-linear model can be used as the evaluation model.

The specifying unit 52 can perform statistical analysis, for example, as the analysis of the ecosystem information of a plurality of ecosystems. Multivariate analysis such as regression analysis and principal component analysis, machine learning methods such as correlation analysis and support vector machines, and the like can be used as statistical analysis methods, for example.

Here, the features of the ecosystem are any features of the ecosystem which differ in ecosystems having different states. The features of the ecosystem are not necessarily representative of specific physical quantities, similar to "features" (quantities) such as images and sounds. For example, cepstrum coefficients serving as features of sound are representative of any features of the sound, but are not representative of specific physical quantities.

Among the components of the ecosystem information, the indicator elements are components that serve as indicators of the features of the ecosystems as described above, and according to (an evaluation model using) such indicator elements, the evaluation score is calculated such that ecosystems having different states are distinguished from each other.

Accordingly, the specifying unit 52 can specify the components for which the evaluation scores are calculated as the indicator elements such that ecosystems having different states are distinguished from each other.

The presentation control unit 53 controls the presentation of an indicator element specified by the specifying unit 52, an evaluation score for evaluating the state of an ecosystem calculated by the evaluation unit 54, a predicted value of the evaluation score calculated by the prediction unit 55, a candidate for an indicator element selected by the selection unit 57, and the like. In other words, the presentation control unit 53 transmits (the name of) the indicator element specified by the specifying unit 52, the evaluation score calculated by the evaluation unit 54, the predicted value of the evaluation score calculated by the prediction unit 55, and the candidate for the indicator element selected by the selection unit 57 to the terminal 11 for display, and the indicator element, the evaluation score, the predicted value of the evaluation score, and the candidate for the indicator element are displayed to the user.

As described above, indicator elements that serve as indicators of features of ecosystems are specified by the specifying unit 52 analyzing ecosystem information of a plurality of ecosystems, and thus components useful for evaluating the state of the ecosystems can be identified.

When the indicator element is presented to the user, the user can easily recognize, from among the huge number of components of the ecosystem information, components that serve as indicators of some features of the ecosystem that differ depending on the state of the ecosystem for the purpose of evaluating the state of the ecosystem, i.e., components that are useful for evaluating the state of the ecosystem.

As a result, the components that the user obtains (collects) in evaluating the state of the ecosystem can be minimized. In other words, it is sufficient for the user to obtain (collect) only components (indicator elements) useful for evaluating the state of the ecosystem, and it is not necessary to obtain (collect) unnecessary components that do not (significantly) affect the evaluation of the state of the ecosystem.

Furthermore, by having an evaluation score for evaluating the state of the ecosystem calculated and presented to the user, the user can easily recognize the state of the ecosystem and, for example, easily determine the quality of the management that is (or was) performed on the ecosystem. This makes it possible to support the user in managing the ecosystem.

Herein, in the present specification, "component" or "indicator element" may mean the type (attribute name, such as a name) of the component or the indicator element, or may mean the value (attribute value) of the component or the indicator element.

Using (the value of) the indicator element of the target ecosystem to be evaluated, the evaluation unit 54 calculates an evaluation score for evaluating the state of the target ecosystem using the evaluation model generated by the specifying unit 52.

The user can use an ecosystem for which the ecosystem information is stored in the database 51, an ecosystem managed by the user, or any other ecosystem as the target ecosystem.

For example, by operating the terminal 11, a user can specify (an ecosystem to serve as) the target ecosystem from ecosystems for which ecosystem information is stored in the database 51. In this case, the evaluation unit 54 calculates the evaluation score (for evaluating the state) of the target ecosystem using (the value of) the indicator element among the components (of the ecosystem information) of the target ecosystem stored in the database 51.

Additionally, for example, when using the ecosystem being managed as the target ecosystem, the user obtains (the value of) the indicator element of the ecosystem being managed, used as the target ecosystem, and transmits that indicator element from the terminal 11 to the server 12. The evaluation unit 54 calculates the evaluation score of the target ecosystem using the indicator element of the target ecosystem transmitted from the terminal 11.

The prediction unit 55 calculates a predicted value for the evaluation score of the ecosystem having vegetation represented by predetermined vegetation information, e.g., vegetation information transmitted from the terminal 11 in response to an operation by the user, using a trained model which takes the vegetation information of the ecosystem as an input and outputs the evaluation score for evaluating the state of the ecosystem calculated using the indicator element of the ecosystem.

The generation unit 56 generates an Augmented Reality (AR) object representing the evaluation score for evaluating the state of the target ecosystem, calculated using the indicator elements of the target ecosystem, the components of the target ecosystem, or the like, which is displayed as AR in a predetermined space containing the target ecosystem, and transmits the AR object to a terminal that performs AR display. As a result, display control of the AR object is performed in the terminal that performs AR display.

The terminal that performs AR display may be the terminal 11, or may be a terminal other than the terminal 11.

The "AR object" is an object (image) displayed in AR using AR technology.

The selection unit 57 selects, as an indicator element candidate, a component in the ecosystem information that belongs to an element group, among element groups classified according to the properties of the indicator elements, to which a predetermined component does not belong.

In the server 12 configured as described above, specifying the indicator elements from the components of the ecosystem information by the specifying unit 52, i.e., specifying the components for which the evaluation scores are calculated such that ecosystems having different states are distinguished from each other, can be performed with or without defining a specific ecosystem.

When indicator elements are specified by defining a specific ecosystem, a component for which the evaluation score is calculated such that ecosystems in different states are distinguished from each other, and a higher (or lower) evaluation score is calculated for an ecosystem whose state is similar to that of the specific ecosystem, is identified as an indicator element.

Accordingly, when indicator elements are specified by defining a specific ecosystem, a component for which the evaluation score is calculated according to the similarity with (the state of) the specific ecosystem is identified as the indicator element.

When specifying the indicator elements without defining a specific ecosystem, the specifying unit 52 can specify the indicator elements from the components of the ecosystem information by performing a principal component analysis or the like, for example, on the ecosystem information of the plurality of ecosystems stored in the database 51.

For example, the specifying unit 52 specifies, as an indicator element, a component for which (the absolute value of) the magnitude of a coefficient is at least a threshold, or a component for which the magnitude of the coefficient is up to an upper N position, in a formula for a linear combination of components representing an axis of a lower-order principal component obtained through principal component analysis of the ecosystem information of the plurality of ecosystems, e.g., a first principal component.

Furthermore, in the specifying unit 52, for example, a principal component analysis is performed only on the indicator elements of the components of the ecosystem information of the plurality of ecosystems, and a linear combination formula of the indicator elements representing the axis of the first principal component is generated as the evaluation model (an evaluation score calculation formula) for calculating the evaluation score.

In this case, the evaluation unit 54 uses the indicator elements of the target ecosystem, and the evaluation score of the target ecosystem calculated through the evaluation model is a principal component score of the first principal component.

The evaluation score of the target ecosystem calculated through the evaluation model generated by principal component analysis represents what can be called the positioning of the target ecosystem within the plurality of ecosystems for which ecosystem information is stored in the database 51, and the magnitude of (the value of) the evaluation score has no meaning.

Accordingly, the evaluation score of the target ecosystem expresses the similarity between the state of the target ecosystem and other ecosystems in relation to the evaluation scores of other ecosystems, but the value of the evaluation score itself is not related to the superiority or inferiority of the state of the ecosystem.

In other words, the evaluation score of the target ecosystem indicates that (the state of) the target ecosystem is similar to other ecosystems if that evaluation score is close to the evaluation score of other ecosystems, and indicates that the target ecosystem is not similar to other ecosystems if that evaluation score is far from the evaluation score of other ecosystems.

Accordingly, for example, by taking two different ecosystems as target ecosystems and obtaining evaluation scores for the two ecosystems, the user can determine the similarity of those two ecosystems.

The two different ecosystems may be two ecosystems at different locations, or two ecosystems at different times, i.e., two ecosystems having the same location, with one ecosystem from before management by the user and one ecosystem from after management by the user, for example.

By taking the ecosystem from before management and the ecosystem from after management as the target ecosystems and obtaining the evaluation score, the user can recognize the degree of change in the state of the ecosystem between before and after management.

On the other hand, when specifying the indicator elements by defining a specific ecosystem, the specifying unit 52 selects the specific ecosystem from among a plurality of ecosystems for which the ecosystem information is stored in the database 51, for example.

For example, the user can specify the ecosystem to be managed (the ecosystem to be built through management) ("goal ecosystem", hereinafter) from among the plurality of ecosystems for which the ecosystem information is stored in the database 51. One or more ecosystems (having similar states) among the plurality of ecosystems for which ecosystem information is stored in the database 51 can be designated as the goal ecosystem.

In the specifying unit 52, the goal ecosystem is selected as the specific ecosystem.

When a specific ecosystem is selected (defined), the specifying unit 52 can specify the indicator elements from the components of the ecosystem information by performing a logistic regression analysis with L1 regularization, for example, on the ecosystem information of the plurality of ecosystems stored in the database 51.

The specifying unit 52 introduces a dummy variable representing whether an ecosystem is the specific ecosystem, and assigns 0 or 1 to the dummy variable, e.g., 1, to indicate the ecosystem is the specific ecosystem, and assigns 0 to the dummy variable to indicate the ecosystem is not the specific ecosystem.

Then, the specifying unit 52 performs a logistic regression analysis with L1 regularization using the dummy variable indicating whether the ecosystem is the specific ecosystem as a response variable and each component of the ecosystem information as an explanatory variable.

The components which are unnecessary explanatory variables are omitted in the L1 regularization, and thus the specifying unit 52 specifies the components which are explanatory variable remaining as a result of the L1 regularization as indicator elements.

Furthermore, in the specifying unit 52, a logistic regression model (a logistic function) obtained by logistic regression analysis with L1 regularization, or a linear predictor constituting the logistic regression model, is generated as the evaluation model (the evaluation score calculation formula).

A "linear predictor" is an expression of a linear combination of a (partial) regression coefficient and a component (indicator element) as an explanatory variable, and constitutes a part of a logistic regression model (a logistic function).

In this case, the evaluation unit 54 uses the indicator elements of the target ecosystem, and the evaluation score of the target ecosystem calculated through the evaluation model is a posterior probability that the target ecosystem is a specific ecosystem, or a result of computing the linear predictor, output by the logistic regression model.

The evaluation score of the target ecosystem calculated by the evaluation model generated by logistic regression analysis (with L1 regularization) represents a similarity (a degree of similarity) that the target ecosystem is similar to the specific ecosystem. In other words, a higher evaluation score indicates that the target ecosystem is more similar to a specific ecosystem.

Accordingly, by obtaining the evaluation score of the target ecosystem, the user can determine the similarity of the target ecosystem to the goal ecosystem.

Here, 1 is assigned to the dummy variable indicating an ecosystem is the specific ecosystem, and 0 is assigned to the dummy variable indicating an ecosystem is not the specific ecosystem, but it should be noted that conversely, 0 can be assigned to the dummy variable indicating an ecosystem is the specific ecosystem, and 1 can be assigned to the dummy variable indicating an ecosystem is not the specific ecosystem. In this case, a lower evaluation score indicates that the target ecosystem is more similar to a specific ecosystem.

In addition, rather than the goal ecosystem, the user can specify an ecosystem having properties (a state) opposite from the goal ecosystem (also called an "opposite ecosystem" hereinafter).

For example, when an ecosystem having high biodiversity is the goal ecosystem, an "opposite ecosystem" is an ecosystem having low biodiversity, e.g., the biodiversity is declining due to topsoil runoff, for example.

If the user designates an opposite ecosystem, the opposite ecosystem is selected as the specific ecosystem by the specifying unit 52.

Then, in the specifying unit 52, for example, 0 is assigned to the dummy variable indicating that the ecosystem is the specific ecosystem, 1 is assigned to the dummy variable indicating that the ecosystem is not the specific ecosystem, and the logistic regression analysis is performed.

In this case, the evaluation score of the target ecosystem calculated through the evaluation model generated by logistic regression analysis represents a dissimilarity, i.e., the target ecosystem is not similar to the opposite ecosystem, and thus a similarity to the goal ecosystem having properties opposite from the opposite ecosystem.

### <Example of Management Support by Information Processing System 10>

Fig. 6 is a diagram illustrating an example of management support performed by the information processing system 10.

Fig. 6 illustrates, for example, an example of management support that changes the ecosystem of a field to a goal ecosystem.

The user can operate the terminal 11 to designate a goal ecosystem to be built in the field for which the ecosystem is to be managed (also called a "target field" hereinafter).

The goal ecosystem can be designated, for example, by selecting from among the ecosystems (for which the ecosystem information is) stored in the database 51 of the server 12, inputting ecosystem information such as the biodiversity of the goal ecosystem, or the like. To simplify the descriptions, the following will assume that the goal ecosystem is designated from among the ecosystems stored in the database 51.

When the goal ecosystem is specified, the terminal 11 transmits designation information designating the goal ecosystem to the server 12 (1).

When the designation information has been transmitted from the terminal 11, the server 12 receives the designation information.

Using the specifying unit 52, the server 12 analyzes (some or all of) the ecosystem information of the plurality of ecosystems stored in the database 51, including the ecosystem information of the specific ecosystem, using the goal ecosystem designated in the designation information as the specific ecosystem. For example, the specifying unit 52 performs the logistic regression analysis with L1 regularization illustrated in Fig. 5.

By the specifying unit 52 analyzing the ecosystem information of a plurality of ecosystems, the indicator elements serving as indicators of the features of the target ecosystem, i.e., in this case, the ecosystem of the target field to be managed, are specified from among the components of the ecosystem information, and the evaluation model that calculates the evaluation score is generated.

The server 12 causes the presentation control unit 53 to present the indicator elements in the terminal 11 by transmitting (the name of) the indicator elements to the terminal 11 that transmitted the designation information.

The terminal 11 receives and obtains the indicator elements from the server 12 (2). The terminal 11 presents (the names of) the indicator elements to the user by displaying the elements or the like.

Here, the indicator elements are components, among the components of the ecosystem information, that serve as indicators of the similarity with the goal ecosystem serving as the specific ecosystem, and are the components, among the components of the ecosystem information, that characterize the state of the goal ecosystem.

By presenting the indicator elements, the user can easily recognize components that are useful (effective) for evaluating the similarity with the goal ecosystem, i.e., components that have (at least some) influence on evaluating the similarity with the goal ecosystem.

After the indicator elements are presented, the user obtains (the values of) the indicator elements in the target field.

In other words, to change the ecosystem of the target field to the goal ecosystem, the user performs certain management on the ecosystem of the target field, and obtains indicator elements in the target field from both before and after the management.

The user inputs the indicator elements obtained in the target field by operating the terminal 11 (3). The terminal 11 transmits the indicator elements to the server 12.

The server 12 receives the indicator elements from the terminal 11, and using the indicator elements, the evaluation unit 54 calculates, through the evaluation model, an evaluation score for evaluating the similarity of the ecosystem of the target field ecosystem to the goal ecosystem.

Here, the server 12 registers the indicator elements from the terminal 11 in the database 51 as (the components of) the ecosystem information of the ecosystem of the target field. The server 12 registers the indicator elements transmitted from the terminal 11 of each user, and furthermore, components other than the indicator elements, in the database 51. Ecosystem information of various ecosystems is accumulated in the database 51 as a result.

The server 12 calculates the evaluation score for before the management and the evaluation score for after the management, and by transmitting the evaluation score to the terminal 11, causes the presentation control unit 53 to present the evaluation score in the terminal 11.

The terminal 11 receives and obtains the evaluation score for before the management and the evaluation score for after the management from the server 12 (4). The terminal 11 presents the evaluation score for before the management and the evaluation score for after the management to the user by displaying those evaluation scores.

Through this, the user can compare the evaluation score for before the management with the evaluation score for after the management.

If the evaluation score for after the management is higher than the evaluation score for before the management, the user can recognize that the ecosystem of the target field is changing towards the goal ecosystem as a result of the current management. There is thus an incentive for the user to continue with the current management.

On the other hand, if the evaluation score for after the management is the same as or lower than the evaluation score for before the management, the user can recognize that it is difficult to change the ecosystem of the target field to the goal ecosystem under the current management. There is thus an incentive for the user to consider different management from the current management.

Therefore, according to the information processing system 10, it is possible to support the management of the ecosystem that changes the ecosystem of the target field to the goal ecosystem.

Here, there are a huge number (types) of information that serve as ecosystem information, i.e., components of ecosystem information, and ecosystems are characterized by such a huge number of components. Therefore, when evaluating the similarity of the ecosystem of the target field with the goal ecosystem, strictly speaking, it is necessary to have a huge number of components for the ecosystem of the target field and the goal ecosystem.

However, when the user evaluates the similarity of the ecosystem of the target field with the goal ecosystem, obtaining a huge number of components of ecosystem information from the target field places a heavy burden on the user, and furthermore, obtaining such information may be difficult from the standpoint of cost and the like.

In addition, in reality, there may be components that have (almost) no effect on the evaluation of the similarity with the goal ecosystem.

Accordingly, by analyzing the ecosystem information of a plurality of ecosystems (here, including the ecosystem information of the goal ecosystem) in the server 12, specifying components that have a relatively high effect on the similarity with the goal ecosystem, i.e., indicator elements that serve as indicators of the similarity with the goal ecosystem, and providing the user with the indicator elements, the user can easily recognize the indicator elements that are useful components for evaluating the similarity with the goal ecosystem from among the huge number of components of the ecosystem information.

Then, by obtaining the indicator elements necessary for evaluating the similarity with the goal ecosystem from the target field, rather than obtaining the huge number of components, the user can obtain the evaluation score as the evaluation of the similarity with the goal ecosystem.

As the evaluation score, one scalar value (a unitary value) can also be used, and for example, a plurality of sets of scalar values (vectors) that constitute a radar chart or the like can also be used.

If the evaluation score is one scalar value, the user can very easily recognize whether the evaluation is improving or decreasing according to the increase or decrease of the one scalar value serving as the evaluation score. Furthermore, the user can easily recognize the degree to which the management is affecting the change of the ecosystem according to the difference between the values of the one scalar value serving as the evaluation score, from before and after the management.

Therefore, the following will assume that one scalar value is used as the evaluation score.

Note that in addition to before the management, the server 12 can specify the indicator elements after the management. When the ecosystem information registered in the database 51 changes between before and after the management, different components may be identified as indicator elements between before and after the management. In this case, the indicator elements used for the evaluation are different between before and after the management.

As described above, in the information processing system 10, by analyzing the ecosystem information of a plurality of ecosystems including a goal ecosystem specified by a user, indicator elements that serve as indicators of features of the ecosystem are specified from the components of the ecosystem information and are presented to the user. Furthermore, the evaluation score of the target ecosystem is calculated using the indicator elements of the target ecosystem.

Therefore, for example, in the implementation of an extended ecosystem, i.e., an ecosystem in which the biodiversity and ecosystem service functions have increased beyond a natural state due to the addition of human activity, a user managing an ecosystem who intends to implement an extended ecosystem can easily recognize (the names of) indicator elements useful for evaluating the ecosystem for which the extended ecosystem is to be implemented by specifying (defining) the extended ecosystem as the goal ecosystem (the intended ecosystem) according to their goals.

Furthermore, by inputting (the values of) the indicator elements of the ecosystem in which the user intends to implement the extended ecosystem (the target ecosystem), the user can easily recognize the current state of the ecosystem, that is, the degree to which the current ecosystem is similar to the extended ecosystem which is the goal ecosystem.

Fig. 7 is a diagram illustrating another example of management support performed by the information processing system 10.

In Fig. 7, a predetermined area where a plurality of fields are present serves as a target area for management. In the target area, some of the plurality of fields serve as target fields for management.

In order to implement an extended ecosystem in the target fields, the user (who performs the management) introduces many plant species, e.g., 120 or more types of plant species, and builds an extended ecosystem in the target fields in which plant diversity is in an increased state through self-organization.

In the target area, a plurality of other fields are present around the target fields, and 120 or more types of plant species have been introduced to the plurality of other fields in the past, e.g., three months ago.

At present, plant diversity continues to increase in a field group A among the plurality of other fields, but in a field group B, only specific plant species take precedence, and most other plant species have disappeared.

The user sets the ecosystem of (each field in) the field group A as the goal ecosystem to be built in the target fields, and, taking each of the plurality of ecosystems of the plurality of fields serving as target fields as a target ecosystem, manages different vegetation strategies for the target ecosystems.

In this case, in the field groups A and B, the user obtains ecosystem information, transmits the ecosystem information from the terminal 11 to the server 12, and stores the ecosystem information in the database 51.

Furthermore, by operating the terminal 11, the user designates the ecosystem of the field group A as the goal ecosystem, and the terminal 11 transmits designation information designating the ecosystem of the field group A as the goal ecosystem to the server 12 in response to the operation by the user.

In the server 12, the goal ecosystem is recognized by the specifying unit 52 in accordance with the designation information from the terminal 11.

Furthermore, the specifying unit 52 performs analysis (statistical analysis) using the plurality of ecosystem information including the ecosystem information of the ecosystem in the field group A, serving as the goal ecosystem and stored in the database 51, e.g., the ecosystem information (of the ecosystems) of the field groups A and B, and if necessary, other ecosystem information stored in the database 51.

For example, the specifying unit 52 assigns 1 to the dummy variable indicating that the target ecosystem is the ecosystem of the field group A serving as the goal ecosystem (the specific ecosystem), and assigns 0 to the dummy variable indicating that the target ecosystem is not the ecosystem of the field group A serving as the goal ecosystem.

Then, the specifying unit 52 performs a logistic regression analysis with L1 regularization to generate a logistic regression model that outputs the posterior probability that the target ecosystem is the ecosystem of the field group A serving as the goal ecosystem (the specific ecosystem), taking as the response variable the dummy variable indicating whether the ecosystem is the ecosystem of the field group A serving as the goal ecosystem as the target ecosystem, and taking the components of the ecosystem information as the explanatory variables.

Accordingly, the specifying unit 52 specifies (the name of) the indicator element useful for evaluating the similarity of the ecosystem of the field group A serving as the goal ecosystem from the components of the ecosystem information, and generates a logistic regression model or a linear predictor as the evaluation model.

Here, by operating the terminal 11, the user can specify the component to be used as the indicator element (also called a "target element" hereinafter) among the components of the ecosystem information. The (name of the) target element is transmitted from the terminal 11 to the server 12.

In the server 12, the specifying unit 52 can perform analysis on only the target elements of the components of the ecosystem information, and specify the indicator elements from only the target elements as opposed to all of the components.

A component which can be obtained by a given user may be difficult to obtain by another user. For example, there may be components that require expensive equipment to obtain. Even if a component that requires expensive equipment to obtain is presented as an indicator element, it will be difficult for a user who cannot easily purchase such expensive equipment to obtain the indicator element.

Accordingly, by specifying the components that the user can obtain as the target elements, it is possible to prevent components which are difficult for the user to obtain from being presented as the indicator element.

In the server 12, the indicator elements specified by the specifying unit 52 are transmitted to the terminal 11 by the presentation control unit 53. In the terminal 11, the indicator elements are presented to the user.

Similar to the field groups A and B, the user introduces plant species into each of the plurality of fields serving as target fields, and manages different vegetation strategies.

Furthermore, the user obtains the indicator elements from (each of the fields serving as) the target fields at different times after the introduction of the plant species into the target field, e.g., after one week and after three weeks, respectively. Then, by operating the terminal 11, the user transmits the indicator elements obtained from the target fields to the server 12.

In the server 12, using the indicator elements from the terminal 11, the evaluation unit 54 calculates an evaluation score, for each of the ecosystems of the plurality of fields serving as the target fields, which evaluates the similarity of the ecosystems of the field group A through a logistic regression model or a linear predictor serving as the evaluation model.

Then, in the server 12, the evaluation score calculated by the evaluation unit 54 is transmitted to the terminal 11 by the presentation control unit 53. In the terminal 11, the evaluation score is presented to the user.

The user can view the evaluation score and use the evaluation score to manage the ecosystem.

For example, the user can determine whether the (management of the) vegetation strategy for each field was appropriate by comparing the respective evaluation scores of one week after the introduction of the plant species and three weeks after the introduction of the plant species for each ecosystem of the plurality of fields serving as target fields.

In other words, if the evaluation score for a field after three weeks following the introduction of the plant species was higher than the evaluation score after one week, the user determines that the vegetation strategy was appropriate and maintains the vegetation strategy.

On the other hand, if the evaluation score for a field after three weeks following the introduction of the plant species was not higher than the evaluation score after one week, the user determines that the vegetation strategy was not appropriate and considers changing the vegetation strategy.

As described above, the user can easily determine whether the vegetation strategy adopted to build an ecosystem such as that of the field group A was appropriate for the target field.

Fig. 8 is a flowchart illustrating an example of processing by the terminal 11 when presenting the evaluation score to the user.

In the terminal 11 (Fig. 3), in step S11, the transmitting unit 32 waits for the user to enter the ecosystem information of an ecosystem that is a candidate for ecosystem information analysis by operating the user I/F 31, and transmits the ecosystem information to the server 12, after which the sequence moves to step S12.

For example, by obtaining the ecosystem information of (the ecosystems of) the field groups A and B and operating the user I/F 31, the user enters the ecosystem information of the field groups A and B as the ecosystem information of ecosystems that are candidates for analysis. The transmitting unit 32 transmits the ecosystem information of the field groups A and B entered through the operation of the user I/F 31 to the server 12. The server 12 (Fig. 5) receives the ecosystem information of the field groups A and B from the transmitting unit 32 and stores the information in the database 51.

In addition to the user operating the terminal 11 to enter the ecosystem information, the ecosystem information of the ecosystem that is a candidate for analysis can be selected from the ecosystem information stored in the database 51 of the server 12 by the user operating the terminal 11.

In step S12, the transmitting unit 32 waits for the user to enter the designation information designating the goal ecosystem by operating the user I/F 31, and transmits the designation information to the server 12, after which the sequence moves to step S13.

For example, the server 12 generates a list of some or all of the ecosystems for which the ecosystem information is stored in the database 51 (also called an "ecosystem list" hereinafter), and transmits the list to the terminal 11. The ecosystem list includes at least the ecosystems of the analysis candidates for which the terminal 11 transmitted the ecosystem information in step S11, e.g., the ecosystems of the field groups A and B.

In the terminal 11, the receiving unit 33 receives the ecosystem list from the server 12, and the display control unit 34 causes the ecosystem list to be displayed in the user I/F 31.

By operating the user I/F 31, the user specifies one or more ecosystems from the ecosystem list to be a goal ecosystem, e.g., the ecosystem of the field group A. The transmitting unit 32 transmits the identification information of the ecosystem of the field group A as the ecosystem designated as the goal ecosystem to the server 12 as the designation information.

The server 12 receives the designation information from the transmitting unit 32. In the server 12, of the ecosystems for which ecosystem information is stored in the database 51, the specifying unit 52 sets at least the goal ecosystem designated by the designation information and an ecosystem including the analysis candidate, e.g., an ecosystem included in the ecosystem list, as the targets for analyzing the ecosystem information.

By analyzing the ecosystem information of the ecosystem to be analyzed, the specifying unit 52 specifies, from the components of the ecosystem information, the indicator elements that serve as indicators of the similarity with the goal ecosystem designated by the designation information, and generates an evaluation model that evaluates the state of the target ecosystem with respect to the similarity with the (state of the) goal ecosystem.

For example, in the specifying unit 52, the server 12 performs a logistic regression analysis with L1 regularization to generate a logistic regression model that outputs the posterior probability that the target ecosystem is the ecosystem of the field group A, for example, as the goal ecosystem designated by the designation information, by using the ecosystem information of the ecosystem to be analyzed.

Through this, the indicator element useful for evaluating the similarity of the ecosystem of the field group A serving as the goal ecosystem is specified from the components of the ecosystem information of the ecosystem to be analyzed, and a logistic regression model or a linear predictor is generated as the evaluation model.

In the server 12, the presentation control unit 53 generates an indicator list including the (names of the) indicator elements specified by analyzing the ecosystem information of the ecosystem to be analyzed, and transmits the list to the terminal 11.

In step S13, the receiving unit 33 receives the indicator list from the server 12 and supplies the list to the display control unit 34, and the sequence moves to step S14.

In step S14, the display control unit 34 displays the indicator list from the receiving unit 33 in the user I/F 31 to present the list to the user, and the sequence moves to step S15. Presenting the indicator list enables the user to recognize the components (indicator elements) to be obtained from the target ecosystem.

In step S15, the transmitting unit 32 waits for the user to enter the (values of the) indicator elements of the target ecosystem, and transmits the indicator elements to the server 12, after which the sequence moves to step S16.

For example, the user obtains the indicator elements from the ecosystem of the target field as the target ecosystem, and enters the indicator elements of the ecosystem of the target field by operating the user I/F 31. The transmitting unit 32 transmits the indicator elements of the ecosystem of the target field entered through the operation of the user I/F 31 as described above to the server 12.

The server 12 receives the indicator elements of the target ecosystem from the transmitting unit 32. In the server 12, using the indicator elements from the transmitting unit 32, the evaluation unit 54 calculates an evaluation score for the target ecosystem (e.g., the ecosystem of the target field), which evaluates the similarity with the goal ecosystem (e.g., the ecosystem of the field group A) designated by the designation information, through, for example, a logistic regression model or a linear predictor serving as the evaluation model.

In the server 12, the presentation control unit 53 transmits the evaluation score of the target ecosystem to the terminal 11.

In step S16, the receiving unit 33 receives the evaluation score of the target ecosystem from the server 12 and supplies the score to the display control unit 34, after which the sequence moves to step S17.

In step S17, the display control unit 34 displays the evaluation score of the target ecosystem from the receiving unit 33 in the user I/F 31 to present the score to the user, and the sequence ends.

Fig. 9 is a flowchart illustrating an example of processing by the server 12 when presenting the evaluation score to the user.

In the server 12 (Fig. 5), in step S21, the database 51 waits for the ecosystem information of the ecosystem which is a candidate for analysis to be transmitted from the terminal 11, and receives and stores the ecosystem information, after which the sequence moves to step S22.

In step S22, the specifying unit 52 waits for the designation information to be transmitted from the terminal 11, and receives the designation information, after which the sequence moves to step S23.

In step S23, the specifying unit 52 sets, among the ecosystems for which ecosystem information is stored in the database 51, a plurality of ecosystems including at least the goal ecosystem designated by the designation information and the candidate for analysis, to be analyzed. Then, the specifying unit 52 analyzes the ecosystem information of the ecosystem to be analyzed, and the sequence moves from step S23 to step S24.

By analyzing the ecosystem information of the plurality of ecosystems to be analyzed, the specifying unit 52 specifies, from the components of the ecosystem information, the indicator elements that serve as indicators of the similarity with the goal ecosystem designated by the designation information, and generates an evaluation model that evaluates the state of the target ecosystem with respect to the similarity with the (state of the) goal ecosystem.

In step S24, the presentation control unit 53 generates an indicator list including (the names of) the indicator elements specified by the specifying unit 52, and transmits the list to the terminal 11, after which the sequence moves to step S25.

In step S25, the evaluation unit 54 waits for (the values of) the indicator elements of the target ecosystem to be transmitted from the terminal 11, and receives the indicator elements, after which the sequence moves to step S26.

In step S26, the evaluation unit 54 calculates the evaluation score of the target ecosystem through the evaluation model generated in step S23 using the indicator elements of the target ecosystem from the terminal 11, and the sequence moves to step S27.

In step S27, the presentation control unit 53 transmits the evaluation score of the target ecosystem calculated by the evaluation unit 54 to the terminal 11, and the sequence ends.

In the processing by the terminal 11 in Fig. 8 and the processing by the server 12 in Fig. 9, performed when presenting the evaluation score to the user, steps S11 and S12 and steps S21 to S23 are training phases for evaluating the state of the target ecosystem. In addition, step S15 and steps S25 and S26 are evaluation phases for evaluating the state of the target ecosystem (calculating the evaluation score).

### <Specific Examples of Components of Ecosystem Information>

Fig. 10 is a diagram illustrating a specific example of components of the ecosystem information.

Fig. 10 illustrates a specific example of soil information among the components of the ecosystem information.

Fig. 10 indicates the pH, EC, hardness, exchangeable potassium content, and the like of the soil as the components of the ecosystem information obtained from fields A-1, A-2, and so on as the field group A and fields B-1, B-2, and so on as the field group B, respectively.

Fig. 11 is a diagram illustrating another specific example of components of the ecosystem information.

Fig. 11 illustrates a specific example of plant information among the components of the ecosystem information.

Fig. 11 indicates the chloroplast content (per predetermined unit area of the leaf) of individual eggplants, and the chloroplast content and nitrate nitrogen concentration of individual turnips, as the components of the ecosystem information obtained from the fields A-1, A-2, and so on as the field group A and the fields B-1, B-2, and so on as the field group B, respectively.

In addition to the values of individual plants, the average values of multiple individuals of the same plant species, the average values of individuals of different plant species, and the like can be used for the chloroplast content, the nitrate nitrogen concentration, and the like.

Aside from the pH, EC, hardness, exchangeable potassium content, chloroplast content, and nitrate nitrogen concentration of the soil as described above, various information on the soil, various information on plants, and various vegetation information can be used as the components of the ecosystem information, such as the ratio of plant species or vegetation occupying the space of the ecosystem, e.g., the coverage rate at which all vegetation covers the topsoil of the ecosystem (called "total vegetation coverage rate" hereinafter), the coverage rate of each type of vegetation, the coverage rate of each plant species, and the like.

By analyzing the ecosystem information of the plurality of ecosystems, the specifying unit 52 specifies the indicator elements that serve as indicators of the features of the ecosystem from among the components of the ecosystem information, including various information on the soil as described above, various information on the plants, and various vegetation information.

### <Logistic Regression Analysis>

Fig. 12 is a diagram illustrating logistic regression analysis with a single L1 regularization in the analysis of the ecosystem information of a plurality of ecosystems, performed by the specifying unit 52.

Fig. 12 illustrates an example of a logistic regression model (logistic function) obtained by logistic regression analysis with L1 regularization for logistic regression analysis of the ecosystem information of a plurality of ecosystems.

In Fig. 12, the horizontal axis represents the computation results of the linear predictor, and the vertical axis represents the posterior probability, which is the output value of the logistic regression model.

For example, as described with reference to Figs. 7 and 8, if the ecosystems of the field groups A and B are candidates for analysis and are therefore to be analyzed, and the ecosystem of the field group A is designated as the goal ecosystem, the specifying unit 52 assigns 1 to the dummy variable indicating that the target ecosystem is the ecosystem of the field group A serving as the goal ecosystem (the specific ecosystem), and assigns 0 to the dummy variable indicating that the target ecosystem is not the ecosystem of the field group A serving as the goal ecosystem.

Furthermore, the specifying unit 52 assigns dummy variables to the ecosystems to be analyzed. In other words, a dummy variable with a value (posterior probability) of 1 is assigned to the ecosystem of the field group A, and a dummy variable with a value of 0 is assigned to the ecosystem of the field group B.

Then, the specifying unit 52 performs a logistic regression analysis with L1 regularization using the ecosystem information of the ecosystems of the field groups A and B, taking the dummy variable as the response variable and the components of the ecosystem information as explanatory variables.

In the L1 regularization performed by logistic regression analysis with L1 regularization, components that are unnecessary explanatory variables are omitted. The specifying unit 52 specifies the components which are explanatory variables remaining as a result of the L1 regularization as indicator elements.

An indicator element appears as an explanatory variable in the product of a regression coefficient and an explanatory variable, which constitute a term of an expression of a linear combination serving as a linear predictor, which is part of the logistic regression model (a logistic function).

In Fig. 12, the pH, hardness, and exchangeable potassium content of the soil are specified as indicator elements. The regression coefficients for the pH, hardness, and exchangeable potassium content of the soil are +0.05, -0.03, and +0.04, respectively.

In the specifying unit 52, a logistic regression model obtained by logistic regression analysis with L1 regularization, or a linear predictor constituting the logistic regression model, is taken as the evaluation model (the evaluation score calculation formula).

The output value of the logistic regression model (the function value of the logistic function) with respect to the input of (the values of) the indicator elements of the target ecosystem as the explanatory variable, and the computation result of the linear predictor, represent the likelihood of the ecosystem of the field group A (in the state of) the target ecosystem.

Here, in Fig. 12, the black circles represent the points specified by the result of computing the linear predictor for the input of the indicator elements of each ecosystem of the plurality of fields as the field group A and the dummy variable (= 1) as the response variable. The white circles represent the points specified by the result of computing the linear predictor for the input of the indicator elements of each ecosystem of the plurality of fields as the field group B and the dummy variable (= 0) as the response variable.

Fig. 13 is a diagram illustrating an example of applying, to ecosystem management, a logistic regression model as an evaluation model obtained by logistic regression analysis with L1 regularization or an evaluation score calculated using a linear predictor.

Fig. 13 illustrates a logistic regression model obtained by the logistic regression analysis with L1 regularization illustrated in Fig. 12.

For example, as illustrated in Fig. 12, when the pH, hardness, and exchangeable potassium content of the soil are specified as the indicator elements through the logistic regression analysis with L1 regularization, in the server 12, the presentation control unit 53 transmits the indicator elements to the terminal 11 and presents the indicator elements to the user.

The user introduces plant species based on different vegetation strategies into each of the fields serving as the target fields, and obtains the indicator elements from (each of the fields serving as) the target fields at different times after the introduction, e.g., after one week and after three weeks, respectively.

Then, by operating the terminal 11, the user transmits the indicator elements obtained from the target fields to the server 12.

In the server 12, using the indicator elements from the terminal 11, the evaluation unit 54 calculates an evaluation score, for each of the ecosystems of the plurality of fields serving as the target fields, through a logistic regression model or a linear predictor serving as the evaluation model. The evaluation score here represents the similarity with the ecosystem of the field group A.

In the server 12, the presentation control unit 53 transmits the evaluation score calculated by the evaluation unit 54 to the terminal 11 and presents the score to the user.

The user determines whether the (management of the) vegetation strategy for each field was appropriate by comparing the time-series evaluation scores of one week after the introduction of the plant species and three weeks after the introduction of the plant species for each ecosystem of the plurality of fields serving as target fields.

In Fig. 13, if the evaluation score for a field after three weeks following the introduction of the plant species (the black circles) was higher than the evaluation score after one week (the white circles), as indicated by arrow a1, the user determines that the vegetation strategy was appropriate and maintains the vegetation strategy.

On the other hand, if the evaluation score for a field after three weeks following the introduction of the plant species was lower than the evaluation score after one week, as indicated by arrow a2, the user determines that the vegetation strategy was not appropriate and considers changing the vegetation strategy.

As described above, the user can use the evaluation score to easily determine whether the vegetation strategy adopted to build an ecosystem such as that of the field group A was appropriate for the target field.

### <Specification and Evaluation of Indicator Elements for Each Specific Component>

Fig. 14 is a diagram illustrating an example of the distribution of two components of a plurality of ecosystems to be analyzed.

Fig. 14 illustrates the distribution (of the relationship) between the pH and the hardness of the soil, and the distribution (of the relationship) between the C/N ratio (the ratio of carbon to nitrogen) and the K-ion concentration, as the components of the ecosystem information of the plurality of ecosystems.

In Fig. 14, the triangles represent the components of the goal ecosystem among the analysis targets, and the circles represent the components of the ecosystems other than the goal ecosystem among the analysis targets.

In Fig. 14, the black triangles and circles represent the components of the ecosystems in the subpolar zone, and the white-cut triangles and circles represent the components of the ecosystems in the temperate zone.

According to Fig. 14, in the distribution of the pH and the hardness of the soil, for the ecosystems in the subpolar zone (the black triangles and circles), the distribution is separated between the goal ecosystem (black triangles) and ecosystems other than the goal ecosystem (black circles), as indicated by the dotted lines in the figure.

On the other hand, in the distribution of the pH and the hardness of the soil, for the ecosystems in the temperate zone (the white triangles and circles), the distribution is not separated between the goal ecosystem (white triangles) and ecosystems other than the goal ecosystem (white circles).

Additionally, in the distribution of the C/N ratio and the K-ion concentration in the soil, for the ecosystems in the temperate zone (the white triangles and circles), the distribution is separated between the goal ecosystem (white triangles) and ecosystems other than the goal ecosystem (white circles), as indicated by the dotted line in the figure.

On the other hand, in the distribution of the C/N ratio and the K-ion concentration in the soil, for the ecosystems in the subpolar zone (the black triangles and circles), the distribution is not separated between the goal ecosystem (black triangles) and ecosystems other than the goal ecosystem (black circles).

As described above, in the subpolar zone ecosystems and the temperate ecosystems, the components for which the distributions are divided into the goal ecosystem and the ecosystems other than the goal ecosystem may be different.

In other words, in the subpolar zone ecosystems, the distribution of the pH and the hardness of the soil are separated between the goal ecosystem and ecosystems other than the goal ecosystem, while in the temperate ecosystems, the distribution of the C/N ratio and the K-ion concentration of the soil are separated between the goal ecosystem and ecosystems other than the goal ecosystem.

As described above, the components for which the distributions are separated between the goal ecosystem and the ecosystems other than the goal ecosystem may be different depending on the (values of) specific components, such as the climate zone, and thus the specifications of the indicator elements and the (state of) the target ecosystem can be classified according to each of specific components.

When the specifying of indicator elements and the evaluating of a target ecosystem are performed through classification according to each of specific components, the specific components are used for classifying the ecosystem, and are not used for (analysis for) specifying the indicator elements and evaluating the target ecosystem.

For example, when specifying the indicator elements and evaluating the target ecosystem for each climate zone, e.g., the temperate zone, the subtropical zone, the arid zone, the subpolar zone, and the like, among the components of the ecosystem information, in the specifying of the indicator elements, the ecosystems to be analyzed are classified according to the climate zone such that ecosystems in the same climate zone belong to the same group.

Then, for each group of ecosystems in the same climate zone, analysis is performed using the components excluding the climate zone as the specific components of the ecosystem belonging to that group, the indicator elements are specified, and the evaluation model is generated. Accordingly, the indicator elements are specified and the evaluation model is generated for each ecosystem climate zone.

In the evaluation of the target ecosystem, a group of ecosystems in the same climate zone as the climate zone of the target ecosystem is selected, and the evaluation score is calculated using the evaluation model for that group.

Climate information other than the climate zone of the ecosystem can be used as a specific component. For example, in addition to predetermined (standardized) climate categories such as climate zones, the (annual) amount of precipitation, sunlight intensity, and the like can be used as specific components. In addition, for example, categories that classify the climate zones in more detail, such as a climate zone divided according to detailed features such as temperature and amount of precipitation, can be used as specific components.

In addition, components other than climate information can be used as the specific components. For example, vegetation information can be used as the specific component. Specifically, for example, the proportion of the annual plant niche occupying the ecosystem, serving as the vegetation information, can be used as the specific component. In this case, the ecosystems to be analyzed are classified into groups, e.g., according to whether the ratio of the annual plant niche occupying the ecosystem is at least 50%.

Here, the method in which the indicator elements are specified and the target ecosystem is evaluated having performed classification according to each specific component will be referred to as a "classification method", and the method in which the indicator elements are specified and the target ecosystem is evaluated without performing classification according to each specific component will be referred to as a "non-classification method".

The non-classification method is equivalent to treating a specific component in the classification method as a factor that affects the result, aside from the confounding factor, i.e., the factor to be investigated, and using that specific component as the explanatory variable in the analysis of the ecosystem information, in the same manner as the other components.

Figs. 8 and 9 above are examples of processing by the terminal 11 and the server 12 when specifying indicator elements and evaluating a target ecosystem, and presenting the indicator elements and the evaluation score to the user, through the non-classification method.

Fig. 15 is a flowchart illustrating an example of processing by the terminal 11 when specifying an indicator element and evaluating a target ecosystem through a classification method, and presenting the indicator element and the evaluation score to a user.

In the terminal 11 (Fig. 3), in step S41, the transmitting unit 32 transmits the ecosystem information of the ecosystem that is a candidate for analysis to the server 12 in the same manner as in step S11 in Fig. 8, and the sequence then moves to step S42.

In step S42, the transmitting unit 32 waits for the user to enter the designation information designating the goal ecosystem and the specific component by operating the user I/F 31, and transmits the designation information to the server 12, after which the sequence moves to step S43.

The server 12 receives the designation information from the transmitting unit 32. In the server 12, of the ecosystems for which ecosystem information is stored in the database 51, the specifying unit 52 sets at least the goal ecosystem designated by the designation information and a plurality of ecosystems including the candidate for analysis, as the targets for analyzing the ecosystem information.

Furthermore, the specifying unit 52 classifies the ecosystems to be analyzed into groups according to the (values of the) specific components, and analyzes the ecosystem information of the ecosystems to be analyzed for each of the groups. In the classification method, the ecosystem information of the ecosystem to be analyzed is analyzed without using the specific components of the ecosystem information.

By analyzing the ecosystem information, the specifying unit 52 specifies, from the components of the ecosystem information, the indicator elements that serve as indicators of the similarity with the goal ecosystem designated by the designation information, and generates an evaluation model that evaluates the state of the target ecosystem with respect to the similarity with the (state of the) goal ecosystem, for each of the groups.

In the server 12, the presentation control unit 53 generates, for each of the groups, an indicator list including the (names of the) indicator elements specified by analyzing the ecosystem information of the ecosystem to be analyzed, and transmits the indicator list for each of the groups to the terminal 11.

In step S43, the receiving unit 33 receives the indicator list for each of the groups from the server 12 and supplies the list to the display control unit 34, and the sequence moves to step S44.

In step S44, the display control unit 34 displays the indicator list for each of the groups from the receiving unit 33 in the user I/F 31 to present the list to the user, and the sequence moves to step S45. The user can recognize the group of the target ecosystem based on the specific components of the target ecosystem, and recognize the components (indicator elements) to be obtained from the target ecosystem based on the indicator list of that group.

In step S45, the transmitting unit 32 waits for the user to obtain (the values of) the indicator elements and (the values of) the specific components of the target ecosystem and enter the indicator elements and the specific components of the target ecosystem by operating the user I/F 31, and then transmits the indicator elements and the specific components to the server 12, after which the sequence moves to step S46.

Thereafter, in steps S46 and S47, the terminal 11 performs the same processing as in steps S16 and S17, respectively, in Fig. 8.

Fig. 16 is a flowchart illustrating an example of processing by the server 12 when specifying indicator elements and evaluating a target ecosystem through the classification method, and presenting the indicator elements and the evaluation score to a user.

In the server 12 (Fig. 5), in steps S51 and S52, the same processing is performed as in steps S21 and S22, respectively, in Fig. 9.

In other words, in step S51, the database 51 receives and stores the ecosystem information of the ecosystem that is a candidate for analysis from the terminal 11. In step S52, the specifying unit 52 receives the designation information from the terminal 11.

In step S53, the specifying unit 52 sets, among the ecosystems for which ecosystem information is stored in the database 51, a plurality of ecosystems including at least the goal ecosystem designated by the designation information and the candidate for analysis, to be analyzed.

Furthermore, the specifying unit 52 classifies the ecosystems to be analyzed into groups according to the specific components specified by the designation information, and analyzes the ecosystem information of the ecosystems to be analyzed for each of the groups, after which the sequence moves from step S53 to step S54.

Through this, the specifying unit 52 specifies, from the components of the ecosystem information, the indicator elements that serve as indicators of the similarity with the goal ecosystem designated by the designation information, and generates an evaluation model that evaluates the state of the target ecosystem with respect to the similarity with the goal ecosystem, for each of the groups.

In step S54, for each of the groups, the presentation control unit 53 generates an indicator list including (the names of) the indicator elements specified by the specifying unit 52 for each of the groups, and transmits the lists to the terminal 11, after which the sequence moves to step S55.

In step S55, the evaluation unit 54 waits for (the values of) the indicator elements and (the values of) the specific components of the target ecosystem to be transmitted from the terminal 11, and receives the indicator elements and the specific components, after which the sequence moves to step S56.

In step S56, the evaluation unit 54 recognizes the group of the target ecosystem through the specific components of the target ecosystem from the terminal 11. Furthermore, the evaluation unit 54 calculates the evaluation score of the target ecosystem through the evaluation model for the group of the target ecosystem, generated in step S53, using the indicator elements of the target ecosystem from the terminal 11, after which the sequence moves to step S57.

In step S57, the presentation control unit 53 transmits the evaluation score of the target ecosystem calculated by the evaluation unit 54 to the terminal 11, and the sequence ends.

In the processing by the terminal 11 in Fig. 15 and the processing by the server 12 in Fig. 16, steps S41 and S42 and steps S51 to S53 are training phases for evaluating the state of the target ecosystem. In addition, step S45 and steps S55 and S56 are evaluation phases for evaluating the state of the target ecosystem.

### <Specification and Evaluation of Indicator Elements Using Specific Components>

Fig. 17 is a flowchart illustrating an example of processing by the terminal 11 when specifying indicator elements and evaluating a target ecosystem using a specific component, and presenting the indicator elements and the evaluation score to a user.

In the server 12, a specific component can be used when evaluating the state of the ecosystem, and (the value of) the specific component being high (or low), e.g., the biodiversity being high, many metabolites being present, and the like, can be taken as a high evaluation.

If a specific component being high is taken as meaning a high evaluation, the server 12 generates a prediction formula for predicting the specific component using other components by analyzing ecosystem information of a plurality of ecosystems including the specific component.

Furthermore, in generating the prediction formula, the server 12 specifies a component that affects the predicted value of the specific component calculated from the prediction formula to at least a certain degree as an indicator element, and generates, as the evaluation model, a prediction formula that predicts the specific component using that indicator element.

For example, taking a component pertaining to biodiversity, metabolites, or the like, serving as the specific component, as the response variable, and taking other components as the explanatory variables, the server 12 performs multivariate analysis, e.g., multi regression analysis, while performing L1 regularization, for example, to select a component to serve as a meaningful explanatory variable for explaining the response variable.

In this case, in the server 12, the component selected as the meaningful explanatory variable by the L1 regularization is specified as the indicator element.

Furthermore, in the server 12, through multi regression analysis, a regression formula, serving as a prediction formula that takes the indicator elements as the explanatory variables and predicts the response variable from the explanatory variables, is generated as the evaluation model. The evaluation score calculated by this evaluation model is a predicted value of (the value of) the specific component serving as the response variable.

Here, in the analysis of the ecosystem information, when a prediction formula that calculates some predicted value that serves as the evaluation score is generated using the components of the ecosystem information, e.g., when a multivariate analysis is performed using the specific component of the ecosystem information as the response variable and other components as the explanatory variables, and a regression formula (regression equation) (a formula for a linear combination of the regression coefficient and the explanatory variables) is generated as the prediction formula that calculates the predicted value of the specific component, the specification of the indicator element can be performed through a variable selection method other than L1 regularization, e.g., a stepwise method, deleting components serving as explanatory variables for which the magnitude of the regression coefficient is a threshold or less, or the like.

In other words, the selection of components to serve as meaningful explanatory variables that explain the response variable can be performed using the stepwise method, and the components selected as meaningful explanatory variables by the stepwise method can be specified as indicator elements.

Alternatively, in the regression formula which predicts the response variable from the explanatory variables, generated through the multivariate analysis, the components remaining after deleting components that are explanatory variables for which the magnitude of the regression coefficient is a threshold or less can be specified as indicator elements.

As described above, when a prediction formula that predicts a specific component using the indicator elements is generated as the evaluation model, in evaluating the state of the target ecosystem, the predicted value of the specific component is calculated as the evaluation score through a prediction formula such as a regression formula serving as the evaluation model, using the indicator elements of the target ecosystem.

The predicted value of the specific component serving as the evaluation score being high indicates a high evaluation, and thus an ecosystem in which the specific component is large can be considered to have been set as the goal ecosystem. Accordingly, the user does not need to explicitly specify the goal ecosystem.

For example, components related to biodiversity and metabolites as described above can be used as specific components.

Specific examples of components related to biodiversity include, for example, the soil microbial diversity, the plant diversity, and the like. Specific examples of components related to metabolites include the metabolite profiles of plants and the like, e.g., the amount of the specific secondary metabolites, the diversity of secondary metabolites, and the like.

Here, the soil microbial diversity, the amount of specific secondary metabolites, and the diversity of the secondary metabolites can be obtained from the ecosystem. However, obtaining the soil microbial diversity requires, for example, metagenomic analysis of the soil samples. In addition, metabolome analysis, spectroscopic analysis, and the like are required to obtain the amount of specific secondary metabolites and the diversity of secondary metabolites.

Devices that perform metagenomic analysis, metabolome analysis, and spectroscopic analysis are expensive, and it is not practical for individual users to purchase such devices. It is possible to request specialized institutions (companies) to provide metagenomic analysis, metabolome analysis, and spectroscopic analysis services, but making use of such services is not cheap either.

As described above, obtaining the soil microbial diversity, the amount of the specific secondary metabolites, and the diversity of the secondary metabolites is expensive. Among the components of the ecosystem information, there are other components that are also expensive to obtain.

When a prediction formula that predicts a specific component using indicator elements is generated as an evaluation model, a predicted value of the specific component is calculated as an evaluation score.

Accordingly, when a prediction formula that predicts a specific component is generated as the evaluation model, the user does not need to obtain the specific component in the evaluation of the target ecosystem. As a result, the burden on the user when the specific component is a component which is expensive to obtain in particular can be greatly reduced.

As described above, when specifying indicator elements using specific components and evaluating the target ecosystem, in the terminal 11 (Fig. 3), in step S71, the transmitting unit 32 transmits a request for the indicator list to the server 12 in response to an operation of the user I/F 31 by the user, after which the sequence moves to step S72.

In step S72, the receiving unit 33 waits for the server 12 to transmit the indicator list in response to the request for the indicator list, receives the indicator list, and supplies the list to the display control unit 34, after which the sequence moves to step S73.

Thereafter, in steps S73 to S76, the terminal 11 performs the same processing as in steps S14 and S17, respectively, in Fig. 8.

Fig. 18 is a flowchart illustrating an example of processing by the server 12 when specifying an indicator element and evaluating a target ecosystem using a specific component, and presenting the indicator element and an evaluation score to a user.

In the server 12 (Fig. 5), when a request for the indicator list has been transmitted from the terminal 11, in step S81, the specifying unit 52 receives the request for the indicator list from the terminal 11, after which the sequence moves to step S82.

In step S82, the specifying unit 52 sets the specific component from among the components of the ecosystem information in response to the request for the indicator list.

Furthermore, the specifying unit 52 sets a plurality of ecosystems to be analyzed from the ecosystems for which ecosystem information is stored in the database 51.

Then, by analyzing the ecosystem information of the ecosystem to be analyzed, the specifying unit 52 specifies a component used in the prediction formula serving as the evaluation model for predicting the specific component as the indicator element, and generates the prediction formula serving as the evaluation model, after which the sequence moves from step S82 to step S83.

For example, the specifying unit 52 sets, as the specific component, one of the components that serves as an indicator of how the ecosystem is functioning, e.g., the soil microbial diversity, the amount of the specific secondary metabolites, and the diversity of the secondary metabolites. The specific component can be set by, for example, having the user designate, by operating the terminal 11, the component to be set as the specific component.

The specifying unit 52 sets a plurality of ecosystems, including the specific component which is a component of the ecosystem information, to be analyzed, from the ecosystems for which ecosystem information is stored in the database 51.

For example, taking the specific component among the components of the ecosystem information of the ecosystem to be analyzed as the response variable, and taking other components as the explanatory variables, the specifying unit 52 performs multi regression analysis, while performing L1 regularization, for example, to select a component to serve as a meaningful explanatory variable for explaining the response variable.

The specifying unit 52 specifies a component selected as a meaningful explanatory variable through the L1 regularization as an indicator element, and generates, as an evaluation model, an expression of linear combination of that indicator element with the regression coefficient obtained by the multi regression analysis.

In step S83, the presentation control unit 53 generates an indicator list including (the names of) the indicator elements specified by the specifying unit 52, and transmits the list to the terminal 11, after which the sequence moves to step S84.

In addition to the indicator elements, (names of) the specific components can be included in the indicator list. In this case, presenting the indicator list enables the user to recognize the specific component. Furthermore, here, the evaluation score is the predicted value of the specific component, and the user can therefore recognize the meaning of the evaluation score, e.g., the evaluation score, represents a predicted value, such as of the soil microbial diversity.

In step S84, the evaluation unit 54 waits for (the values of) the indicator elements of the target ecosystem to be transmitted from the terminal 11, and receives the indicator elements, after which the sequence moves to step S85.

In step S85, using the indicator elements of the target ecosystem from the terminal 11, the evaluation unit 54 calculates, through the evaluation model generated in step S82, the predicted value of the specific component of the target ecosystem as the evaluation score of the target ecosystem, after which the sequence moves to step S86.

In step S86, the presentation control unit 53 transmits the evaluation score of the target ecosystem calculated by the evaluation unit 54 to the terminal 11, and the sequence ends.

In specifying the indicator elements using specific components and evaluating the target ecosystem as described above, for example, when the soil microbial diversity is set as the specific component, the components that affect the soil microbial diversity are specified as the indicator elements.

Then, an ecosystem having high soil microbial diversity, i.e., an ecosystem in which the soil microbiome is functioning well, is defined implicitly or substantially as the goal ecosystem, and (the similarity to the goal ecosystem of) the target ecosystem is evaluated.

In the evaluation of the target ecosystem, using the indicator elements of the target ecosystem, the predicted value of the soil microbial diversity of the target ecosystem is calculated as the evaluation score of the target ecosystem.

Accordingly, even if it is difficult for the user to directly obtain the soil microbial diversity of the target ecosystem, the evaluation score enables the user to recognize the (approximate) soil microbial diversity of the target ecosystem.

Furthermore, by referring to the (value of the) indicator element used when a high evaluation score (an evaluation score of at least a threshold) was calculated, e.g., the hardness of the soil or the like, the state of the indicator element of the ecosystem having a high soil microbial diversity, e.g., the hardness of the soil or the like, can be recognized.

In addition, in specifying the indicator elements using specific components and evaluating the target ecosystem, for example, when the amount of the specific secondary metabolites of individual plants or the diversity of the secondary metabolites of the plants is set as the specific component, a component that affects the amount of the specific secondary metabolites or the diversity of the secondary metabolites is specified as an indicator element.

Then, an ecosystem in which the amount of the specific secondary metabolites is high, or an ecosystem in which the diversity of the secondary metabolites is high, i.e., an ecosystem in which the biological interactions between the individual plants living in the ecosystem and the other species are strong and diverse, and in which the physiological state of the plants, such as the metabolism, is good, is defined as an implicit or substantial goal ecosystem, and the target ecosystem is evaluated.

In the evaluation of the target ecosystem, using the indicator elements of the target ecosystem, the predicted value of the amount of the specific secondary metabolites or the diversity of the secondary metabolites in the target ecosystem is calculated as the evaluation score of the target ecosystem.

Accordingly, even if it is difficult for the user to directly obtain the amount of specific secondary metabolites or the diversity of secondary metabolites in the target ecosystem, the evaluation score enables the user to recognize the amount of specific secondary metabolites or the diversity of secondary metabolites in the target ecosystem.

Furthermore, by referring to the (values of the) indicator elements used when a high evaluation score has been calculated, it is possible to recognize the state of indicator elements of an ecosystem in which the amount of specific secondary metabolites is high, or an ecosystem in which the diversity of secondary metabolites is high.

For example, when the flavonoid expression level (the amount of specific secondary metabolites) serving as the evaluation score is calculated using the chloroplast content or the like of individual plants as an indicator element, referring to the chloroplast content or the like used when a high evaluation score has been calculated makes it possible to recognize the chloroplast content or the like of an ecosystem in which the biological interaction is functioning and the flavonoid expression level is high.

Note that when specifying the indicator elements and evaluating the target ecosystem using the specific component, the indicator elements can be specified and the evaluation model can be generated only for some of the components, rather than all of the components (excluding the specific component), of the ecosystem information of the ecosystem to be analyzed.

For example, the indicator elements can be specified and the evaluation model can be generated only for the components, among the components of the ecosystem information of the ecosystem to be analyzed, that are recognized as having a certain degree of correlation with the specific component.

Fig. 19 is a diagram illustrating an example of the correlation between the specific component and other components.

Fig. 19 illustrates the correlation between the soil microbial diversity, which is the specific component, and the soil hardness and pH, which are other components. The correlation coefficient between the soil microbial diversity and the soil hardness is calculated as 0.7, and the correlation coefficient between the soil microbial diversity and the soil pH is calculated as 0.2.

Furthermore, Fig. 19 illustrates the correlation between the flavonoid expression level (the amount of the specific secondary metabolites), which is the specific component, and the chloroplast content and soil hardness, which are other components. The correlation coefficient between the flavonoid expression level and the chloroplast content is calculated as 0.7, and the correlation coefficient between the flavonoid expression level and the soil hardness is calculated as 0.2.

It is possible to select only the components, among the components of the ecosystem information of the ecosystem to be analyzed, for which the magnitude of the correlation coefficient with the specific component is at least a threshold, when specifying the indicator elements and generating the evaluation model.

For example, when 0.6 is used as the threshold, and the soil microbial diversity is set as the specific component, the soil hardness is used as the other component in specifying the indicator element and generating the evaluation model, but the soil pH is not used as the other component.

In addition, when the flavonoid expression level is set as the specific component, the chloroplast content is used as the other component in specifying the indicator element and generating the evaluation model, but the soil hardness is not used as the other component.

It is possible to reduce the load of the processing for specifying the indicator element and generating the evaluation model by only using components for which the correlation coefficient with the specific component is at least the threshold.

### <Specification and Evaluation of Indicator Elements Using Power Law>

Fig. 20 is a diagram illustrating an example of the distribution of plants in an ecosystem in an ecologically optimal region.

In an ecosystem in an ecologically optimal region (or an ecosystem close to an ecologically optimal region), self-organization results in distributions pertaining to plants, such as the distribution of the vegetation profile, following a power law (power distribution).

The indicator elements can be specified and evaluated using the power law. In other words, the indicator elements can be specified and evaluated using the fact that the distribution with respect to the plants living in the ecosystem in the ecologically optimal region follows the power law.

Fig. 20 illustrates the distribution of the coverage rate of each of plant species in an ecosystem where Synecoculture (registered trademark) is applied and an ecologically optimal region is achieved, with the y axis (vertical axis) representing the coverage rate and the x axis (horizontal axis) representing the order of the coverage rate.

The distribution of the coverage rate in Fig. 20 follows (conforms to) the power law.

Among the distributions with respect to the plants living in the ecosystem in the ecologically optimal region, there are other distributions which follow the power law, e.g., first to fourth distributions.

The first distribution is the distribution of the plant coverage rate at each of observation points in the ecosystem. The second distribution is the distribution of the coverage rate of each vegetation in the ecosystem. The third distribution is the distribution of the coverage rate of each niche within the vegetation of the ecosystem. The fourth distribution is the distribution of the yield of each plant species in the ecosystem.

The distribution of the plant coverage rate at each observation point in the ecosystem refers to a distribution, when several tens or more of observation points are set in the ecosystem, in which the coverage rate of the plants in a sub-area including the observation points is represented by the y axis and the number of observation points at each coverage rate that is at least a threshold is represented by the x axis.

The distribution of the coverage rate of each vegetation in the ecosystem refers to a distribution in which the coverage rate of each vegetation in the ecosystem is represented by the y axis and the number of vegetation in each coverage rate that is at least a threshold is represented by the x axis.

The distribution of the coverage rate of each niche in the vegetation of the ecosystem refers to a distribution in which, when any one or more of a plurality of vegetation areas in the ecosystem are divided into niche areas in which niches are formed, the coverage rate of each niche area in the vegetation is represented by the y axis and the number of niches in each of the coverage rates that is at least a threshold is represented by the x axis.

The distribution of the yield of each plant species in the ecosystem refers to a distribution in which the yield of each plant species in the ecosystem is represented by the y axis and the number of plant species (number of types) in each yield that is at least a threshold is represented by the x axis.

In specifying the indicator elements and performing evaluation using the power law, if one or more distributions with respect to plants, such as the first to fourth distributions, follow the power law, an ecosystem in which the distribution with respect to the plant follows the power law can be treated as an ecosystem in an ecologically optimal region.

Accordingly, in the specification of indicator elements and evaluation using the power law, a degree of conformity representing the degree to which the distribution with respect to the plant (here, the first to fourth distributions) follows (conforms to) the power law is calculated.

The degree of conformity can be, for example, the inverse of the sum of the squared errors of the distribution for a plant with respect to a power expression y = Cx^{α} that approximates the distribution for that plant, the likelihood that the distribution for a plant is the power expression y = Cx^{α} that approximates the distribution for that plant, or the like.

The coefficients C and α of the power expression y = Cx^{α} are set such that the power expression y = Cx^{α} approximates the distribution for plants.

The methods of specifying indicator elements and performing evaluation using the power law include first and second methods. Which of the first and second methods to use may be selected by the user operating the terminal 11, for example.

In the first method, an ecosystem, among the ecosystems to be analyzed, in which the degree of conformity of the distribution with respect to the plant (the degree to which the distribution with respect to the plant conforms to the power law) is at least a threshold is detected as an ecosystem in which the distribution with respect to the plant follows the power law, and is set as the goal ecosystem. Then, the ecosystem information of the ecosystem to be analyzed is analyzed, the components that have an impact on the evaluation of the similarity with the goal ecosystem are identified as the indicator elements, and an evaluation model which calculates the evaluation score to evaluate the similarity with the goal ecosystem is generated.

For example, in the first method, 1 serving as a dummy variable is assigned to the goal ecosystem among the ecosystems to be analyzed, 0 serving as a dummy variable is assigned to the other ecosystems as the dummy variable, and logistic regression analysis with L1 regularization is performed for the ecosystem information of the ecosystems to be analyzed using the dummy variable as the response variable and the components of the ecosystem information as the explanatory variables. Through the logistic regression analysis with L1 regularization, components useful for evaluating the similarity with the goal ecosystem are specified as indicator elements, and a logistic regression model or a linear predictor using the indicator elements is generated as the evaluation model.

In the second method, by analyzing the ecosystem information of the ecosystem to be analyzed, the components that affect the degree of conformity of the distribution with respect to the plant are specified as the indicator elements, and a prediction formula that predicts the degree of conformity of the distribution with respect to the plant from the indicator elements is generated as the evaluation model.

For example, in the second method, multi regression analysis with L1 regularization is performed for the ecosystem information of the ecosystem to be analyzed, using the degree of conformity of the distribution with respect to the plants of the ecosystem to be analyzed as the response variable and the components of the ecosystem information as the explanatory variables. Through multi regression analysis with L1 regularization, components that affect the degree of conformity are specified as indicator elements, and a regression formula (regression model) that predicts the degree of conformity using the indicator elements is generated as an evaluation model.

Fig. 21 is a flowchart illustrating an example of processing for specifying an indicator element and generating an evaluation model according to a first method.

In the server 12 (Fig. 5), it is assumed that for each ecosystem, for example, the coverage rate of the plants at each observation point, the coverage rate of each vegetation, the coverage rate of each niche within the vegetation, and the yield of each plant species are stored as components of the ecosystem information in the database 51.

In step Sill, the specifying unit 52 obtains, from the database 51, the coverage rate of the plants at each observation point of each ecosystem to be analyzed, the coverage rate of each vegetation, the coverage rate of each niche within the vegetation, and the yield of each plant species, after which the sequence moves to step S112.

Here, an ecosystem image taken of the ecosystem can be stored in the database 51 as a component of the ecosystem information instead of the coverage rate of the plants at each observation point of the ecosystem, the coverage rate of each vegetation, and the coverage rate of each niche within the vegetation.

In this case, the coverage rate of the plants at each observation point of the ecosystem, the coverage rate of each vegetation, and the coverage rate of each niche within the vegetation can be obtained by analyzing the ecosystem image through image processing.

In other words, by analyzing the ecosystem image, the area of the plants at each observation point appearing in the ecosystem image, the area of each vegetation, and the area of each niche within the vegetation can be detected, and the coverage rate of the plants at each observation point, the coverage rate of each vegetation, and the coverage rate of each niche within the vegetation can be calculated using the detection results from that area.

In step S112, from the coverage rate of the plants at each observation point of each ecosystem to be analyzed, the coverage rate of each vegetation, the coverage rate of each niche within the vegetation, and the yield of each plant species, the specifying unit 52 obtains (calculates) the distribution of the coverage rate of the plants at each observation point, the distribution of the coverage rate of each vegetation, the distribution of the coverage rate of each niche within the vegetation, and the distribution of the yield of each plant species as the first to fourth distributions of each ecosystem to be analyzed, after which the sequence moves to step S113.

In step S113, the specifying unit 52 calculates the degree of conformity (to the power law) of each of the first to fourth distributions of each of the ecosystems to be analyzed, after which the sequence moves to step S114.

In step S114, the specifying unit 52 detects an ecosystem for which the degree of conformity of any of the first to fourth distributions is at least a threshold as an ecosystem in which the distribution with respect to the plant follows a power law (the specific ecosystem), after which the sequence moves to step S115.

In step S115, the specifying unit 52 sets the ecosystem in which the distribution with respect to the plant follows the power law as the goal ecosystem (assuming the ecosystem is in an ecologically optimal region), after which the sequence moves to step S116.

In step S116, among the ecosystems to be analyzed, the specifying unit 52 assigns 1 as a dummy variable to the goal ecosystem and 0 as a dummy variable to the other ecosystems. Furthermore, the specifying unit 52 performs a logistic regression analysis with L1 regularization for the ecosystem information of the ecosystems to be analyzed, taking the dummy variable as the response variable and the components of the ecosystem information as explanatory variables. Through this, the specifying unit 52 specifies (the name of) the indicator element useful for evaluating the similarity with the goal ecosystem from the components of the ecosystem information, and generates a logistic regression model or a linear predictor as the evaluation model, after which the sequence ends.

In the evaluation of the target ecosystem, using the indicator elements of the target ecosystem, the evaluation unit 54 calculates the evaluation score through the evaluation model generated in step S116.

Fig. 22 is a flowchart illustrating an example of processing for specifying an indicator element and generating an evaluation model according to a second method.

In steps S121 to S123, by performing the same processing as in steps S111 to S113 in Fig. 21, the degree of conformity of each of the first to fourth distributions of each of the ecosystems to be analyzed is calculated, after which the sequence moves to step S124.

In step S124, the specifying unit 52 sets the degree of conformity of any one of the first to fourth distributions, e.g., the best degree of conformity, to the degree of conformity of the distribution with respect to the plants in the ecosystem, after which the sequence moves to step S125. For example, among the degrees of conformity of the first to fourth distributions of each ecosystem to be analyzed, the specifying unit 52 sets the degree of conformity of distribution having the best value, the degree of conformity for which the average value of the degree of conformity for the first to fourth distributions for all ecosystems to be analyzed is the best, or the like to the degree of conformity of the distribution with respect to the plant in the ecosystem.

In step S125, the specifying unit 52 performs multi regression analysis with L1 regularization for the ecosystem information of the ecosystem to be analyzed, using the degree of conformity of the distribution with respect to the plants of the ecosystem to be analyzed as the response variable and the components of the ecosystem information as the explanatory variables. Through this, the specifying unit 52 specifies (the name of) the indicator element that affects the degree of conformity (is correlated with the degree of conformity) from the components of the ecosystem information, and generates a regression formula (regression model) as an evaluation model, after which the sequence ends.

In the evaluation of the target ecosystem, using the indicator elements of the target ecosystem, the evaluation unit 54 calculates the evaluation score through the evaluation model generated in step S125.

In the specification of indicator elements and evaluation performed using the power law, based on the fact that the distribution with respect to the plants living in the ecosystem in the ecologically optimal region follows the power law, an ecosystem in which the distribution with respect to the plants has a high degree of conformity to the power law is defined as the goal ecosystem, the ecosystem information is analyzed, and the target ecosystem is evaluated.

Accordingly, the user does not need to specify the goal ecosystem.

Here, in the specification of the indicator elements and the evaluation using the power law, in the first method, an ecosystem in which the degree of conformity is at least a threshold is set as the goal ecosystem, and thus an ecosystem in which the degree of conformity is high is explicitly defined as the goal ecosystem.

However, in the second method, the degree of conformity is the response variable, and thus according to the regression formula serving as the evaluation model, the predicted value of the degree of conformity for the target ecosystem (the degree of conformity of the distribution of plants in the target ecosystem) is calculated as the evaluation score.

Accordingly, in the second method, aiming to increase the evaluation score can be said to be equivalent to aiming for an ecosystem in which the degree of conformity is high, and an ecosystem in which the degree of conformity is high is implicitly or substantially defined as the goal ecosystem.

Note that in both the first and second methods, the evaluation score of the target ecosystem being high means that the distribution of plants in the target ecosystem follows the power law. However, while the evaluation score from the first method represents the similarity of the distribution of plants with the ecosystem set in the goal ecosystem according to the power law, the evaluation score of the second method is the predicted value of the degree of conformity of the distribution with respect to the plants. For this reason, it is desirable to use the second method when strictly aiming at an ecosystem in which the distribution of plants follows the power law for the target ecosystem.

### <Predicting Ecosystem Evaluation Score from Vegetation Information>

Fig. 23 is a diagram illustrating the prediction of an evaluation score for an ecosystem from vegetation information by the prediction unit 55.

By entering the indicator elements of the current target ecosystem into the terminal 11, the user can obtain the evaluation score of the current target ecosystem.

Furthermore, by entering a post-change value of an indicator element that is scheduled to be changed (controlled) in the current target ecosystem into the terminal 11, the user can obtain the evaluation score of the target ecosystem for a case where the indicator element is changed.

Accordingly, by entering a post-change value of an indicator element that is scheduled to be changed in the current target ecosystem into the terminal 11, the user can recognize how the evaluation score will change in response to a change in the indicator element.

In other words, by entering a post-change value of an indicator element that is scheduled to be changed in the terminal 11, the user can recognize whether the (state of the) target ecosystem will approach the (state of the) goal ecosystem.

Then, if the user sees that changing the indicator element will improve the evaluation score and bring the target ecosystem closer to the goal ecosystem, the user can actually perform the task for changing the indicator element in the target ecosystem.

This makes it possible to bring the target ecosystem closer to the goal ecosystem.

Incidentally, some indicator elements are difficult for the user to change. For example, it is difficult for a user to manually change the amount of specific secondary metabolites expressed in an ecosystem.

On the other hand, vegetation information such as the coverage rate at which vegetation covers the topsoil of the ecosystem can be changed relatively easily by the user through tasks such as planting plants.

Therefore, the user being able to recognize how the evaluation score will change by changing the vegetation information is useful for the user to develop a vegetation strategy to bring the target ecosystem closer to the goal ecosystem.

Accordingly, the prediction unit 55 (Fig. 5) calculates a predicted value for the evaluation score of the ecosystem having vegetation represented by the vegetation information transmitted from the terminal 11 in response to an operation by the user, using a trained model which takes the vegetation information of the ecosystem as an input and outputs the evaluation score for the ecosystem.

In other words, as illustrated in Fig. 23, the prediction unit 55 specifies an indicator element D2 by analyzing ecosystem information D1 of ecosystems to be analyzed, including the goal ecosystem, and generates an evaluation model M1 that calculates an evaluation score using the indicator element D2.

Here, the ecosystem information D1 is the ecosystem information excluding vegetation information D4 of the ecosystems to be analyzed from the ecosystem information of the ecosystems to be analyzed. Therefore, since the ecosystem information D1 does not include the vegetation information D4, the vegetation information does not become the indicator element D2.

For each ecosystem to be analyzed, the prediction unit 55 calculates an evaluation score D3 through the evaluation model M1, using the indicator element D2.

The prediction unit 55 associates the evaluation score D3 with the vegetation information D4 for each ecosystem to be analyzed, and using the associated evaluation score D3 and vegetation information D4 (as training data), trains a trained model M2, which takes the vegetation information as an input and outputs an evaluation score, through machine learning or the like, for example.

After that, when the user enters vegetation information D5 of vegetation to be introduced into the target ecosystem in the terminal 11, the terminal 11 transmits the vegetation information D5 to the server 12.

In the server 12, the prediction unit 55 receives the vegetation information D5 from the terminal 11.

By providing the vegetation information D5 as an input to the trained model M2, the prediction unit 55 obtains a predicted value D6 of the evaluation score for the target ecosystem after the introduction of the planned vegetation, which is predicted (output) by the trained model M2.

The predicted value D6 of the evaluation score of the target ecosystem after the introduction of the planned vegetation is displayed in the terminal 11 under the control of the presentation control unit 53.

By similarly obtaining the predicted value of the evaluation score for the vegetation information of the current target ecosystem, and comparing the predicted value of the evaluation score for the current target ecosystem with the predicted value D6 of the evaluation score of the target ecosystem after the introduction of the planned vegetation, the user can recognize whether the target ecosystem will approach the goal ecosystem when the planned vegetation is introduced.

Then, if the user recognizes that the target ecosystem will approach the goal ecosystem, the target ecosystem can be controlled to approach the goal ecosystem by actually introducing the planned vegetation into the target ecosystem.

### <Display Control of AR Object>

Fig. 24 is a flowchart illustrating an example of processing for AR object display control by the generation unit 56.

In the server 12 (Fig. 5), the generation unit 56 can generate an AR object representing the evaluation score of the target ecosystem or the indicator element of the target ecosystem displayed as AR in a predetermined space including the target ecosystem, e.g., in the space of the field, and transmit the AR object to an AR terminal that performs the AR display. Through this, the generation unit 56 performs display control for displaying the AR object in the AR terminal.

For example, if the terminal 11 is a mobile terminal such as a smartphone or the like, the terminal 11 can be used as the AR terminal. Alternatively, a mobile terminal such as a smartphone separate from the terminal 11, smart glasses (wearable glasses), or the like can be used as the AR terminal.

Here, it is assumed that in the server 12, the database 51 stores the ecosystem information of the ecosystems of sub-areas obtained by dividing the field into a mesh shape, for example, for each type of field.

It is furthermore assumed that the database 51 stores position information expressing the position of the ecosystem and the evaluation score of the ecosystem for that sub-area in association with (identification information of) the ecosystem of the sub-area.

The evaluation score of the ecosystem of the sub-area, stored in the database 51, is calculated taking each ecosystem of the sub-area as the target ecosystem, through the evaluation model generated in response to the user carrying the AR terminal operating the terminal 11, for example. As such, the ecosystem of the sub-area is the target ecosystem.

Taking fields in which the AR display is to be performed as AR target fields, the generation unit 56 sets fields near the AR terminal (including the field in which the AR terminal is located) as the AR target fields.

Using, for example, the position information and evaluation scores of the ecosystems stored in the database 51, the generation unit 56 can generate AR objects of a heat map, a three-dimensional graph, or the like expressing the evaluation score of each ecosystem (of each sub-area) into which the AR target field is divided. The AR objects of the heat map, the three-dimensional graph, or the like expressing the evaluation score of each ecosystem in the AR target fields are configured such that the evaluation score of each ecosystem is represented in the position expressed by the position information of that ecosystem.

The generation unit 56 can also generate the AR objects of the heat map, the three-dimensional graph, or the like representing a predetermined component (including an indicator element), such as the biodiversity of each ecosystem of the AR target field, using the ecosystem information stored in the database 51, for example. The AR objects of the heat map, the three-dimensional graph, or the like representing the components of each ecosystem are configured such that (values of) the components of the ecosystem are represented at the positions expressed by the position information of each ecosystem.

The generation unit 56 can also generate AR objects of the name of a specific plant species, such as a given plant species present in each ecosystem of the AR target field, or a plant species that releases volatile components, using the ecosystem information stored in the database 51, for example. The position information and names of plant species present in the ecosystem are assumed to be included in the ecosystem information. The AR objects of the names of the plant species present in the ecosystem are configured such that the name of each plant species is displayed near the position expressed by the position information of the plant species.

By transmitting the AR objects to the AR terminal located near the AR target field, the generation unit 56 performs display control for displaying the AR object in the AR terminal.

For example, when a request (command) for an AR display is transmitted from the AR terminal, in step S311, the generation unit 56 sets a field near the AR terminal as the AR target field in response to the request from the AR terminal, after which the sequence moves to step S312.

Note that the AR terminal includes a measurement means, such as GPS, for measuring the position of the AR terminal, and the request for the AR display transmitted by the AR terminal includes the position information expressing the position of the AR terminal. The generation unit 56 recognizes the fields near the AR terminal using the position information included in the request for the AR display.

In step S312, the generation unit 56 obtains the ecosystem information, location information, and evaluation score of each ecosystem in the AR target field from the database 51, after which the sequence moves to step S313.

In step S313, the generation unit 56 generates the AR objects for AR display in the AR target field using the ecosystem information, location information, and evaluation score of each ecosystem in the AR target field as necessary, after which the sequence moves to step S314.

For example, the generation unit 56 generates AR objects of a heat map or a three-dimensional graph representing the evaluation score of each ecosystem in the AR target field, the (value of a) predetermined component in each ecosystem, or the like. The generation unit 56 also generates AR objects of the names of the plant species present in each ecosystem of the AR target field, for example.

In step S314, the generation unit 56 causes the AR terminal to display the AR objects by transmitting the AR objects to the AR terminal that transmitted the request for AR display, after which the sequence ends.

Fig. 25 is a diagram illustrating a state of an AR target field observed by the user.

In Fig. 25, vegetation is observed in the AR target field.

In addition, in Fig. 25, printed material on which a marker such as a QR code (registered trademark) is printed is installed at each of positions in the AR target field. The marker includes position information expressing the position at which (the printed material on which is printed) the marker is installed.

In the server 12, the generation unit 56 generates AR objects and transmits the objects to the AR terminal carried by the user in the AR target field. In Fig. 25, smart glasses 121 are employed as the AR terminal, and the user wears the smart glasses 121 as the AR terminal to observe the AR target field.

The smart glasses 121 worn by the user as the AR terminal receive the AR objects from the generation unit 56.

The smart glasses 121 recognize the position information of the position where the markers are installed from the markers appearing in the field image obtained by capturing the AR target field with a camera (not shown) provided in the smart glasses 121.

The smart glasses 121 determine, from the position information of the markers, the positions at which the AR objects from the generation unit 56 are to be positioned, and display the AR objects in AR such that the AR objects appear to be present at those positions.

This makes it possible for the user to observe the AR objects displayed as AR along with the AR target field in real space.

Fig. 26 is a diagram illustrating an example of an image entering the field of view of the user through the smart glasses 121 serving as the AR terminal.

The user can observe objects present in the real world, such as vegetation in the AR target field, the markers, and the like.

Furthermore, the user can observe the AR objects that the smart glasses 121 display as AR.

In Fig. 26, a heat map representing the evaluation score of each ecosystem in the AR target field is displayed as the AR object. In the heat map, at each position in the AR target field, the evaluation score of the ecosystem at that position is indicated by color, i.e., differences in hue, saturation, and brightness.

Fig. 27 is a diagram illustrating an example of a three-dimensional graph serving as an AR object that represents an evaluation score of each of ecosystems in an AR target field.

In the three-dimensional graph serving as an AR object representing the evaluation score of each ecosystem in the AR target field, an xy plane is taken as the ground surface of the AR target field, and the z axis direction perpendicular to the xy plane is a graph representing the evaluation score of the ecosystem at each position on the xy plane.

In the three-dimensional graph, the evaluation score of the ecosystem at each position on the xy plane is represented by a curved surface. In the three-dimensional graph, a mesh pattern can be added to the curved surface representing the evaluation score, as illustrated in Fig. 27. By adding a mesh pattern to the curved surface representing the evaluation score, the user can easily recognize the degree of the evaluation score of the ecosystem at each position when viewing the three-dimensional graph.

AR objects of the heat map, the three-dimensional graph, or the like representing a predetermined component, such as the biodiversity of each ecosystem in the AR target field, can also be displayed in the same manner as AR objects representing the evaluation score.

In addition to displaying the AR object in the real space observed by the user through the smart glasses 121 or the like, the AR object can also be displayed in a captured image of the real space, e.g., in a smartphone or the like.

For example, when the terminal 11 is a smartphone, and the terminal 11, which is a smartphone, is used as the AR terminal, the AR objects can be displayed in the field image captured when the AR target field is being captured by the terminal 11, which is a smartphone.

Fig. 28 is a diagram illustrating an example of the display of AR objects in the terminal 11, which is a smartphone.

A display window 131 and a button group 132 are displayed in the display unit 22A in the terminal 11 (Fig. 2), which is a smartphone.

The (field image of the) AR target field captured by the terminal 11 is displayed in the display window 131. Furthermore, the heat map, the names of the plant species, and the like as the AR objects generated by the generation unit 56 are displayed in the display window 131.

The button group 132 has an evaluation value button, an indicator value button, and a species information button.

The evaluation value button, the indicator value button, and the species information button each switches on and off each time the corresponding button is tapped. In Fig. 28, the hatched buttons are turned on, and the white buttons are turned off.

The display of the corresponding AR object is turned on or off when the evaluation value button, the indicator value button, and the species information button are turned on or off.

Fig. 28 illustrates an example of the display of the AR objects when, of the evaluation value button, the indicator value button, and the species information button, only the evaluation value button is turned on, and when the evaluation value button and the species information button are turned on.

When the evaluation value button is turned on, the AR objects of the heat map or the three-dimensional graph representing the evaluation score of each ecosystem in the AR target field are displayed.

When the indicator value button is turned on, the AR objects of the heat map or the three-dimensional graph representing a (value of a) predetermined component, such as the biodiversity of each ecosystem in the AR target field, are displayed.

The user can select whether to display the heat map or the three-dimensional graph, for example, by operating a pull-down menu or the like (not shown).

The components for displaying the AR objects of the heat map or the three-dimensional graph when the indicator value button is turned on can be selected, for example, by a user operating a pull-down menu or the like (not shown). The components that can be selected by operating a pull-down menu or the like can be limited to only the indicator elements.

The AR objects of the names of the plant species present in each ecosystem of the AR target field are displayed when the species information is turned on.

The names can be displayed for some or all of the plant species present in each ecosystem of the AR target field.

For example, if the number of plant species present in each ecosystem of the AR target field exceeds a threshold set in advance in consideration of the legibility of the name, a number of plant species that is the threshold or less, reduced in consideration of the legibility of the name, can be set for the name display.

In addition, for example, a plant species whose coverage rate in the ecosystem is above or below a threshold can be set for the name display. If a plant species whose coverage rate in the ecosystem is at least a threshold is set for the name display, the user can easily view the plant species. If a plant species whose coverage rate in the ecosystem is a threshold or less is set for the name display, the user can recognize the presence of a plant species that is difficult to see.

As described above, by displaying AR objects representing the evaluation score of an ecosystem, the (values of the) components of the ecosystem information, or the like in an AR target field, the user can easily recognize the evaluation score of the ecosystem, components such as the biodiversity, and the like at each position in the AR target field.

Additionally, by turning on and off the AR display of the evaluation score, the components, and the name of the plant species in the ecosystem, the user can be made aware of the evaluation score, the components, and the relationship among the plant species.

### <Selection of Indicator Element Candidates>

Fig. 29 is a flowchart illustrating an example of processing for selecting candidates for indicator elements by the selection unit 57.

The ecosystem information entered by the user by operating the terminal 11 is stored in the database 51 of the server 12, and the specifying unit 52 specifies indicator elements from among the components of the ecosystem information entered by the user.

For this reason, if a component that is suitable as an indicator element is not sufficiently included in the components entered by the user, an appropriate evaluation score may not be obtained even if indicator elements are specified from such components and the evaluation score is calculated using the indicator elements.

Accordingly, the selection unit 57 selects such a component as an indicator element candidate in order to prompt the user to enter a component that is presumed to be likely to be suitable as the indicator element.

In the selection of the indicator element candidates, in step S321, the selection unit 57 generates a group table, and the sequence then moves to step S322.

The "group table" is a table including classification results from classifying the components of the ecosystem information into groups according to the properties thereof, and will be described in detail later. A group in which components are classified according to the properties thereof is also referred to as an "element group".

In step S322, the selection unit 57 detects, in the group table, an element group to which the component entered by the user does not belong, and the sequence then moves to step S323.

In step S323, the selection unit 57 selects the component belonging to the element group detected in step S322 as an indicator element candidate, and generates a candidate list including that indicator element candidate, after which the sequence ends.

The candidate list is supplied from the selection unit 57 to the presentation control unit 53.

The presentation control unit 53 presents the candidate list from the selection unit 57 to the user by transmitting the list to the terminal 11 for display.

By referring to the candidate list, the user can recognize the indicator element candidates included in the candidate list.

Fig. 30 is a diagram illustrating an example of the group table.

In the group table, (identification information of) element groups to which components belong are associated with those components, which are the pH, nitrate ion concentration, hardness, and the like of the soil, for example.

Fig. 31 is a flowchart illustrating an example of processing for generating the group table.

In step S331, the selection unit 57 obtains the ecosystem information stored in the database 51 and open ecosystem information, and the sequence then moves to step S332.

"Open ecosystem information" is ecosystem information that is publicly available, e.g., ecosystem information such as soil profiles of ecosystems (including natural ecosystems and agricultural ecosystems) described in articles on the Internet and the like.

In step S332, the selection unit 57 generates a correlation matrix among the components of the ecosystem information obtained in step S331, and the sequence then moves to step S333.

Note that the correlation coefficients among the components of the correlation matrix among the components of the ecosystem information obtained in step S331 can be obtained through calculations using the components of the ecosystem information obtained in step S331. In addition, the correlation coefficients among the components of the correlation matrix can be obtained from a database in which the correlation coefficients among the components of the ecosystem information are stored, if such a database is present.

In step S333, the selection unit 57 classifies components having a correlation coefficient that is at least a threshold into the same element group according to the correlation matrix among the components, and generates the group table, after which the sequence moves to step S334.

Here, the group table generated by classifying the components according to the correlation matrix is also referred to as a "correlation group table".

In step S334, the selection unit 57 qualitatively classifies the components on a theoretical basis and generates the group table, after which the sequence moves to step S335.

Classifying the components qualitatively on a theoretical basis means classifying the components into components having similar properties based on knowledge obtained with respect to the ecosystem. For example, as the population density increases in an ecosystem, the carbon dioxide concentration increases as well, and thus the population density and the carbon dioxide concentration are classified into the same element group as components having similar properties.

The group table generated by classifying the components on a theoretical basis is also referred to as a "theoretical group table".

In step S335, the selection unit 57 integrates the correlation group table and the theoretical group table into one group table, and the sequence ends.

The integration of the correlation group table and the theoretical group table can be performed, for example, by adding the element group of the theoretical group table to the correlation group table.

When adding the element group of the theoretical group table to the correlation group table, when the same component belongs to an element group GA of the correlation group table and an element group GB of the theoretical group table, the element group GB is changed to the same group as the element group GA. In other words, the component belonging to the element group GB is changed to a component belonging to the element group GA.

Note that in the generation of the group table, only the correlation group table or the theoretical group table can be generated.

Fig. 32 is a diagram illustrating an example of the correlation matrix among components used to generate the correlation group table.

In the correlation matrix, for example, components having a correlation coefficient magnitude (absolute value) of at least a threshold, such as 0.6, are classified into the same element group. For example, the pH and all components having a correlation coefficient with pH which is at least a threshold are classified into the same element group.

As described above, in the selection unit 57, a component, in the group table, which belongs to an element group to which the component entered by the user does not belong is selected as an indicator element candidate, and a candidate list including the indicator element candidate is generated.

Accordingly, the component included as an indicator element candidate in the candidate list is a component having low correlation and high independence with respect to the component entered by the user, i.e., a component having properties that are significantly different from the components entered by the user so far.

If components suitable as indicator elements are not sufficiently included in the components entered by the user so far, it is presumed that there is likely to be a component that is suitable as an indicator element among the components that have properties that are significantly different from the components entered by the user so far.

Accordingly, the candidate list may enable the user to recognize a component that is likely to be suitable as the indicator element and prompt the user to enter such a component.

Note that the present technique may be configured through cloud computing in which a plurality of devices share and cooperatively process one function over a network.

In addition to being executed by a single device, each step of the processing by the server 12 can be executed in a distributed manner by a plurality of devices.

When a single step includes a plurality of processes, the plurality of processes included in the single step can be executed by a single device, or in a distributed manner by a plurality of devices.

The advantageous effects described in the present specification are merely exemplary and are not limited, and other advantageous effects may be achieved.

The present technique can be configured as follows.

<1> A program for causing a computer to function as an information processing device, the information processing device including:
   a specifying unit that, by analyzing ecosystem information of a plurality of ecosystems, specifies, from components of the ecosystem information, an indicator element to serve as an indicator of a feature of an ecosystem.
<2> The program according to <1>,
   wherein the information processing device further includes a presentation control unit that controls presentation of the indicator element.
<3> The program according to <1> or <2>,
   wherein the information processing device further includes an evaluation unit that, using the indicator elements of the target ecosystem to be evaluated, calculates an evaluation score for evaluating a state of the target ecosystem.
<4> The program according to any one of <1> to <3>,
   wherein as the indicator element, the specifying unit specifies the component for which the evaluation score is calculated such that ecosystems having different states are distinguished from each other.
<5> The program according to any one of <1> to <3>,
   wherein as the indicator element, the specifying unit specifies, the component that serves as an indicator of a similarity with a specific ecosystem.
<6> The program according to <5>,
   wherein as the indicator element, the specifying unit specifies the component having a distribution, with respect to the specific ecosystem designated by a user or with respect to a plant, that serves as an indicator of a similarity with the specific ecosystem according to a power law.
<7> The program according to <5> or <6>,
   wherein the specifying unit performs a logistic regression analysis with L1 regularization, using a dummy variable indicating whether an ecosystem is the specific ecosystem as a response variable and the component of the ecosystem information of the plurality of ecosystems including the specific ecosystem as an explanatory variable, and specifies the component serving as the explanatory variable remaining in the L1 regularization as the indicator element.
<8> The program according to <7>,
   wherein using the indicator element of the target ecosystem to be evaluated, a result of computing a linear predictor obtained through the logistic regression analysis, or a posterior probability that the target ecosystem is the specific ecosystem, is calculated as an evaluation score for evaluating a state of the target ecosystem.
<9> The program according to <3>,
   wherein as the evaluation score, the evaluation unit calculates a predicted value of the specific component calculated by a prediction formula that predicts the specific component using the indicator element.
<10> The program according to <9>,
   wherein the specific component is information pertaining to biodiversity or metabolites.
<11> The program according to <3>,
   wherein as the evaluation score, the evaluation unit calculates a predicted value of a degree of conformity calculated by a prediction formula that, using the indicator element, predicts the degree of conformity to which a distribution pertaining to a plant in an ecosystem conforms to a power law.
<12> The program according to any one of <1> to <11>,
   wherein the information processing device further includes a prediction unit that, using a trained model that takes vegetation information of an ecosystem as an input and outputs an evaluation score for evaluating the state of the ecosystem calculated using the indicator element of the ecosystem, calculates a predicted value for the evaluation score of an ecosystem having vegetation represented by predetermined vegetation information.
<13> The program according to any one of <1> to <12>,
   wherein the information processing device further includes a generation unit that generates an Augmented Reality (AR) object representing an evaluation score for evaluating the state of the target ecosystem to be evaluated, calculated using the indicator element of the target ecosystem, or the component of the target ecosystem, the AR object being displayed as AR in a predetermined space containing the target ecosystem, and transmits the AR object to a terminal that performs AR display.
<14> The program according to <13>,
   wherein the generation unit generates the AR object representing the indicator element of the target ecosystem.
<15> The program according to any one of <1> to <14>, further including:
   a selection unit that selects, as an indicator element candidate, a component in the ecosystem information that belongs to an element group, among element groups classified according to properties of components, to which a predetermined component does not belong.
<16> The program according to any one of <1> to <15>,
   wherein the ecosystem information includes, as the component, some or all of:
   climate information,
   vegetation information,
   chemical information, physical information, and biological information of soil of the ecosystem, and
   chemical information, physical information, and biological information of plants.
<17> The program according to <16>,
   wherein the ecosystem information includes, as the component, some or all of:
   a climate zone, amount of precipitation, and sunlight intensity of the ecosystem, a coverage rate of vegetation covering topsoil, and a percentage of a niche of the vegetation,
   pH, Electric Conductivity (EC), hardness, and exchangeable potassium content of soil, and soil microbial diversity, and
   a chloroplast content, a nitrate ion concentration, and a flavonoid expression level of an individual plant, a coverage rate of a plant species covering topsoil, and plant diversity.
<18> The program according to <16> or <17>,
   wherein the ecosystem information includes a qualitative variable component and a quantitative variable component.
<19> An information processing device including:
   a specifying unit that, by analyzing ecosystem information of a plurality of ecosystems, specifies, from components of the ecosystem information, an indicator element to serve as an indicator of a feature of an ecosystem.
<20> An information processing method including:
   specifying, by analyzing ecosystem information of a plurality of ecosystems, an indicator element to serve as an indicator of a feature of an ecosystem, from components of the ecosystem information.

### [Reference Signs List]

11 Terminal
12 Server
13 Network
21 Positioning unit
22 Input/output unit
22A Display unit
23 Storage drive
24 Sensor unit
25 Computation unit
26 Communication unit
31 User I/F
32 Transmitting unit
33 Receiving unit
34 Display control unit
41 Input/output unit
42 Storage drive
43 Communication unit
44 Computation unit
51 Database
52 Specifying unit
53 Presentation control unit
54 Evaluation unit
55 Prediction unit
56 Generation unit
57 Selection unit
121 Smart glasses
131 Display window
132 Button group

## Claims

1. A program for causing a computer to function as an information processing device, the information processing device comprising:
a specifying unit that, by analyzing ecosystem information of a plurality of ecosystems, specifies, from components of the ecosystem information, an indicator element to serve as an indicator of a feature of an ecosystem.

2. The program according to claim 1,
wherein the information processing device further comprises a presentation control unit that controls presentation of the indicator element.

3. The program according to claim 1,
wherein the information processing device further comprises an evaluation unit that, using the indicator elements of the target ecosystem to be evaluated, calculates an evaluation score for evaluating a state of the target ecosystem.

4. The program according to claim 1,
wherein as the indicator element, the specifying unit specifies the component for which the evaluation score is calculated such that ecosystems having different states are distinguished from each other.

5. The program according to claim 1,
wherein as the indicator element, the specifying unit specifies the component that serves as an indicator of a similarity with a specific ecosystem.

6. The program according to claim 5,
wherein as the indicator element, the specifying unit specifies the component having a distribution, with respect to the specific ecosystem designated by a user or with respect to a plant, that serves as an indicator of a similarity with the specific ecosystem according to a power law.

7. The program according to claim 5,
wherein the specifying unit performs a logistic regression analysis with L1 regularization, using a dummy variable indicating whether an ecosystem is the specific ecosystem as a response variable and the component of the ecosystem information of the plurality of ecosystems including the specific ecosystem as an explanatory variable, and specifies the component serving as the explanatory variable remaining in the L1 regularization as the indicator element.

8. The program according to claim 7,
wherein using the indicator element of the target ecosystem to be evaluated, a result of computing a linear predictor obtained through the logistic regression analysis, or a posterior probability that the target ecosystem is the specific ecosystem, is calculated as an evaluation score for evaluating a state of the target ecosystem.

9. The program according to claim 3,
wherein as the evaluation score, the evaluation unit calculates a predicted value of the specific component calculated by a prediction formula that predicts the specific component using the indicator element.

10. The program according to claim 9,
wherein the specific component is information pertaining to biodiversity or metabolites.

11. The program according to claim 3,
wherein as the evaluation score, the evaluation unit calculates a predicted value of a degree of conformity calculated by a prediction formula that, using the indicator element, predicts the degree of conformity to which a distribution pertaining to a plant in an ecosystem conforms to a power law.

12. The program according to claim 1,
wherein the information processing device further comprises a prediction unit that, using a trained model that takes vegetation information of an ecosystem as an input and outputs an evaluation score for evaluating the state of the ecosystem calculated using the indicator element of the ecosystem, calculates a predicted value for the evaluation score of an ecosystem having vegetation represented by predetermined vegetation information.

13. The program according to claim 1,
wherein the information processing device further comprises a generation unit that generates an Augmented Reality (AR) object representing an evaluation score for evaluating the state of the target ecosystem to be evaluated, calculated using the indicator element of the target ecosystem, or the component of the target ecosystem, the AR object being displayed as AR in a predetermined space containing the target ecosystem, and transmits the AR object to a terminal that performs AR display.

14. The program according to claim 13,
wherein the generation unit generates the AR object representing the indicator element of the target ecosystem.

15. The program according to claim 1, further comprising:
a selection unit that selects, as an indicator element candidate, a component in the ecosystem information that belongs to an element group, among element groups classified according to properties of components, to which a predetermined component does not belong.

16. The program according to claim 1,
wherein the ecosystem information includes, as the component, some or all of:
climate information,
vegetation information,
chemical information, physical information, and biological information of soil of the ecosystem, and
chemical information, physical information, and biological information of plants.

17. The program according to claim 16,
wherein the ecosystem information includes, as the component, some or all of:
a climate zone, amount of precipitation, and sunlight intensity of the ecosystem, a coverage rate of vegetation covering topsoil, and a percentage of a niche of the vegetation,
pH, Electric Conductivity (EC), hardness, and exchangeable potassium content of soil, and soil microbial diversity, and
a chloroplast content, a nitrate ion concentration, and a flavonoid expression level of an individual plant, a coverage rate of a plant species covering topsoil, and plant diversity.

18. The program according to claim 16,
wherein the ecosystem information includes a qualitative variable component and a quantitative variable component.

19. An information processing device comprising:
a specifying unit that, by analyzing ecosystem information of a plurality of ecosystems, specifies, from components of the ecosystem information, an indicator element to serve as an indicator of a feature of an ecosystem.

20. An information processing method comprising:
specifying, by analyzing ecosystem information of a plurality of ecosystems, an indicator element to serve as an indicator of a feature of an ecosystem, from components of the ecosystem information.
